# EUROPEAN PATENT APPLICATION

(11) **EP 4 564 725 A1**
(43) Date of publication of application: **04.06.2025**
(21) Application number: 23856261.5
(22) Date of filing: 27.06.2023
(51) Int. Cl.: H04L 5/00, H04L 27/26

(54) **COMMUNICATION METHOD AND COMMUNICATION APPARATUS**

(30) Priority: 24.08.2022 CN 202211019507
(71) Applicant: Huawei Technologies Co., Ltd., Shenzhen, Guangdong 518129 (CN)
(72) Inventor: WANG, Xiaolu, Shenzhen, Guangdong 518129 (CN); YU, Tianhang, Shenzhen, Guangdong 518129 (CN); LUO, Hejia, Shenzhen, Guangdong 518129 (CN); LI, Rong, Shenzhen, Guangdong 518129 (CN)
(74) Representative: Pfenning, Meinig & Partner mbB
(86) International application number: PCT/CN2023/102940
(87) International publication number: WO 2024/041170

(57) **Abstract**

A communication method and a communication apparatus are provided. The communication method includes: determining a target subcarrier set based on a first subcarrier set and a second subcarrier set, and performing data transmission based on the first subcarrier set and the target subcarrier set. A subcarrier in the first subcarrier set is used to carry a reference signal, and a subcarrier in the second subcarrier set is used to carry a signal for suppressing a PAPR. The first subcarrier set and the second subcarrier set have M same subcarriers, the target subcarrier set and the first subcarrier set have Y overlapping subcarriers, and Y is greater than or equal to 0 and less than M. In other words, the target subcarrier set and the first subcarrier set have no intersection set, or the target subcarrier set and the first subcarrier set have fewer overlapping subcarriers. Therefore, a PAPR suppression performance loss caused by a conflict between some subcarriers included in a TR pattern and an RS pattern can be reduced or avoided.

## Description

### CROSS-REFERENCE TO RELATED APPLICATIONS

This application claims priority to Chinese Patent Application No. 202211019507.2, filed with the China National Intellectual Property Administration on August 24, 2022 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

A tone reservation (tone reservation, TR) technology may be used to suppress a peak-to-average power ratio (peak-to-average power ratio, PAPR) of a waveform. In other words, a transmit end reserves some subcarriers to carry signals for suppressing the PAPR. In addition to sending the signal for suppressing the PAPR, the transmit end further sends a reference signal. When a plurality of reserved subcarriers for suppressing the PAPR overlap a subcarrier for carrying the reference signal, to ensure channel estimation and decoding performance, an overlapping subcarrier is not used to carry the signal for suppressing the PAPR. However, this reduces PAPR suppression performance.

### SUMMARY

This application provides a communication method and a communication apparatus, to reduce a PAPR suppression performance loss as much as possible, and ensure good PAPR suppression performance.

According to a first aspect, an embodiment of this application provides a communication method. The method may be performed by a communication apparatus. The communication apparatus may be a communication device or a communication apparatus that can support the communication device in implementing a function required by the method, for example, a chip system. The following provides descriptions by using an example in which the communication device is the communication apparatus. For example, the communication apparatus is a terminal device or a network device, a chip disposed in the communication apparatus, or another component configured to implement a function of the communication apparatus.

The communication method includes: determining a target subcarrier set based on a first subcarrier set and a second subcarrier set, and performing data transmission based on the first subcarrier set and the target subcarrier set. A subcarrier in the first subcarrier set is used to carry a reference signal, and a subcarrier in the second subcarrier set is used to carry a signal for suppressing a PAPR. The first subcarrier set and the second subcarrier set have M same subcarriers, the target subcarrier set and the first subcarrier set have Y overlapping subcarriers, and Y is greater than or equal to 0 and less than M.

The first subcarrier set is also referred to as a reference signal (reference signal, RS) set (or an RS pattern), and the second subcarrier set is also referred to as an original TR set (or an original TR pattern or an original reserved tone set). When the first subcarrier set and the second subcarrier set have an intersection set, for example, the first subcarrier set and the second subcarrier set have M same subcarriers, the communication apparatus may re-determine a set including the subcarrier for carrying the signal for suppressing the PAPR, that is, the target subcarrier set (also referred to as a target TR set). The target subcarrier set and the first subcarrier set have Y same subcarriers, and Y is greater than or equal to 0 and less than M. In other words, the target subcarrier set and the first subcarrier set have no intersection set, or the target subcarrier set and the first subcarrier set have fewer overlapping subcarriers. Because a quantity of subcarriers in the target subcarrier set for carrying the signal for suppressing the PAPR is greater than a quantity of subcarriers in the second subcarrier set for carrying the signal for suppressing the PAPR, a PAPR suppression performance loss caused by a conflict between some subcarriers included in a TR pattern and the RS pattern can be reduced or avoided.

In a possible implementation, that the communication apparatus determines the target subcarrier set based on the first subcarrier set and the second subcarrier set includes: The communication apparatus determines the target subcarrier set based on the first subcarrier set, the second subcarrier set, and a mapping relationship. The mapping relationship is correspondences between at least one first subcarrier set, at least one second subcarrier set, and at least one target subcarrier set.

The correspondences between the at least one first subcarrier set, the at least one second subcarrier set, and the at least one target subcarrier set may be predefined, preconfigured, or agreed on. When the first subcarrier set and the second subcarrier set have the intersection set, the corresponding target subcarrier set may be determined based on the correspondences, the first subcarrier set, and the second subcarrier set, thereby reducing complexity of determining the target subcarrier set.

Optionally, the communication apparatus is the network device, and the method further includes: The communication apparatus sends the correspondences between the at least one first subcarrier set, the at least one second subcarrier set, and the at least one target subcarrier set to a terminal device. Correspondingly, the communication apparatus is the terminal device, and the method further includes: The communication apparatus receives the correspondences between the at least one first subcarrier set, the at least one second subcarrier set, and the at least one target subcarrier set from a network device.

Optionally, the communication apparatus is the network device, and the method further includes: The communication apparatus sends information about the first subcarrier set and/or information about the second subcarrier set to a terminal device. The communication apparatus is the terminal device, and the method further includes: The terminal device receives information about the first subcarrier set and/or information about the second subcarrier set that are/is sent by the communication apparatus. The information about the first subcarrier set includes, for example, an index of the first subcarrier set. The information about the second subcarrier set includes, for example, an index of the second subcarrier set. The network device or the terminal device determines the target subcarrier set based on the first subcarrier set and the second subcarrier set. For example, the network device and the terminal device determine the target subcarrier set based on the first subcarrier set, the second subcarrier set, and the predefined mapping relationship. Alternatively, the network device and the terminal device determine the target subcarrier set based on the first subcarrier set and the second subcarrier set, and according to an agreed-on calculation method. Alternatively, the network device and the terminal device pre-determine and prestore the target subcarrier set based on the first subcarrier set and the second subcarrier set, and according to an agreed-on calculation method.

In a possible implementation, the target subcarrier set includes X subcarriers in a third subcarrier set and a fourth subcarrier set. The fourth subcarrier set is a set including a subcarrier in all subcarriers in a bandwidth of the communication apparatus other than a subcarrier included in the third subcarrier set and the first subcarrier set. The third subcarrier set is a subcarrier set obtained by excluding X subcarriers from a fifth subcarrier set, the fifth subcarrier set is obtained by performing K cyclic shifts on the second subcarrier set, and K is greater than or equal to 1 and is less than or equal to a largest cyclic shift quantity. X is a quantity of subcarriers included in an intersection set of the fifth subcarrier set and the first subcarrier set, and X is less than or equal to M.

When the second subcarrier set and the first subcarrier set have the intersection set, at least one cyclic shift may be performed on the second subcarrier set, to obtain the fifth subcarrier set. The fifth subcarrier set and the first subcarrier set have X same subcarriers. If X is less than or equal to M, it may be considered that TR that overlaps the first subcarrier set is reduced through K cyclic shifts. Then, the TR (that is, the X subcarriers) included in the fifth subcarrier set and overlapping the first subcarrier set is replaced with the subcarrier in the fourth subcarrier set, to obtain the target subcarrier set. The fourth subcarrier set is a subcarrier set that is not for carrying the reference signal or the signal for suppressing the PAPR. Therefore, the target subcarrier set and the first subcarrier set have no intersection set, or the target subcarrier set and the first subcarrier set have fewer overlapping subcarriers. It should be noted that a cyclic shift value used for one cyclic shift may be 0.

In a possible implementation, the X subcarriers include a first subcarrier, the first subcarrier corresponds to a largest quantity of sequence number differences, and the sequence number difference belongs to a first sequence number difference set. The first sequence number difference set is obtained by excluding a sequence number difference in a third sequence number difference set from a second sequence number difference set. The second sequence number difference set includes a difference between a sequence number of each subcarrier in the fourth subcarrier set and a sequence number of each subcarrier in the third subcarrier set. The third sequence number difference set includes a difference between sequence numbers of subcarriers in the third subcarrier set.

When the X subcarriers included in the fifth subcarrier set and overlapping the first subcarrier set are replaced, the subcarrier with the largest quantity of sequence number differences in the first sequence number difference set may be preferentially selected.

In a possible implementation, the target subcarrier set includes Z subcarriers in a sixth subcarrier set and a seventh subcarrier set. The sixth subcarrier set is a set including a remaining subcarrier obtained by excluding the M subcarriers that overlap the first subcarrier set from the second subcarrier set. The seventh subcarrier set is a set including a subcarrier in all subcarriers in a bandwidth of the communication apparatus other than a subcarrier included in the sixth subcarrier set and the first subcarrier set, and Z is less than or equal to M.

When the second subcarrier set and the first subcarrier set have the intersection set, one or more subcarriers included in the second subcarrier set and overlapping the first subcarrier set may be replaced with the subcarrier in the seventh subcarrier set, to obtain the target subcarrier set. The seventh subcarrier set is a subcarrier set that is not for carrying the reference signal or the signal for suppressing the PAPR. Therefore, according to the method, the target subcarrier set and the first subcarrier set have no intersection set, or the target subcarrier set and the first subcarrier set have fewer overlapping subcarriers.

In a possible implementation, the Z subcarriers include a second subcarrier, the second subcarrier corresponds to a largest quantity of sequence number differences, and the sequence number difference belongs to a fourth sequence number difference set. The fourth sequence number difference set is obtained by excluding a sequence number difference in a sixth sequence number difference set from a fifth sequence number difference set. The fifth sequence number difference set includes a difference between a sequence number of each subcarrier in the seventh subcarrier set and a sequence number of each subcarrier in the sixth subcarrier set. The sixth sequence number difference set includes a difference between sequence numbers of subcarriers in the sixth subcarrier set.

When the M subcarriers included in the second subcarrier set and overlapping the first subcarrier set are replaced, the subcarrier with the largest quantity of sequence number differences in the fourth sequence number difference set may be preferentially selected.

In a possible implementation, the first subcarrier belongs to at least two third subcarriers in the fourth subcarrier set, and quantities of sequence number differences corresponding to the at least two third subcarriers are the same, and a sequence number of the first subcarrier is a smallest sequence number in sequence numbers of the at least two third subcarriers; a sequence number of the first subcarrier is a largest sequence number in sequence numbers of the at least two third subcarriers; or the first subcarrier is a y^{th} subcarrier in the at least two third subcarriers. Sequence numbers of the at least two third subcarriers are sorted in ascending order or descending order.

If the subcarriers included in the fifth subcarrier set and overlapping the first subcarrier set are replaced, when a plurality of subcarriers correspond to a largest quantity of sequence number differences in the fourth subcarrier set, the first subcarrier may be determined according to any one of the foregoing rules, so that target subcarrier sets determined by two communication ends are the same.

In a possible implementation, the target subcarrier set is a set including a remaining subcarrier obtained by excluding X subcarriers that overlap the first subcarrier set from a fifth subcarrier set. The fifth subcarrier set is a subcarrier set obtained by performing K cyclic shifts on the second subcarrier set, K is greater than or equal to 1 and is less than or equal to a largest cyclic shift quantity.

Optionally, the communication apparatus is the network device, and the method further includes: The communication apparatus sends a cyclic shift value to a terminal device. The network device or the terminal device performs a cyclic shift on the second subcarrier set based on the cyclic shift value to obtain the target subcarrier set. Alternatively, the network device or the terminal device performs a cyclic shift on the second subcarrier set based on the cyclic shift value to obtain the fifth subcarrier set, and the remaining subcarrier obtained by excluding the subcarriers that overlap the first subcarrier set from the fifth subcarrier set forms the target subcarrier set. The network device or the terminal device carries, on the subcarrier included in the target subcarrier set, the signal for suppressing the PAPR, to perform data transmission.

When the second subcarrier set and the first subcarrier set have the intersection set, at least one cyclic shift may be performed on the second subcarrier set to obtain the fifth subcarrier set, to reduce the subcarriers that overlap the first subcarrier set. The X subcarriers included in the fifth subcarrier set and overlapping the first subcarrier set are excluded, to obtain the target subcarrier set, to reduce a conflict.

According to a second aspect, an embodiment of this application provides a communication apparatus. The communication apparatus has a function of implementing behavior in the method embodiment of the first aspect. For beneficial effects, refer to the descriptions of the first aspect. Details are not described herein again.

The communication apparatus may be the communication apparatus in the first aspect, or the communication apparatus may be an apparatus that can implement the method provided in the first aspect, for example, a chip or a chip system. In a possible design, the communication apparatus includes a corresponding means (means) or module configured to perform the method in the first aspect. For example, the communication apparatus includes a processing unit (sometimes also referred to as a processing module or a processor) and/or a transceiver unit (sometimes also referred to as a transceiver module or a transceiver). The transceiver unit may include a sending unit and a receiving unit, or it may be understood as that a sending unit and a receiving unit are a same functional module. Alternatively, the transceiver unit is understood as a general term of a sending unit and a receiving unit, and the sending unit and the receiving unit may be different functional modules. These units (modules) may perform a corresponding function in the method example in the first aspect. For details, refer to the detailed descriptions in the method example. Details are not described herein.

According to a third aspect, an embodiment of this application provides a communication apparatus. The communication apparatus may be the communication apparatus in the second aspect, or a chip or a chip system disposed in the communication apparatus in the second aspect. The communication apparatus may be a terminal device or a network device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the communication apparatus in the foregoing method.

According to a fourth aspect, an embodiment of this application provides a communication apparatus. The communication apparatus includes an input/output interface and a logic circuit. The input/output interface is configured to input and/or output information. The logic circuit is configured to perform the method according to any one of the aspects of the first aspect.

According to a fifth aspect, an embodiment of this application provides a chip system. The chip system includes a processor, and may further include a communication interface, configured to implement the method in the first aspect. In a possible implementation, the chip system further includes a memory, configured to store a computer program. The chip system may include a chip, or may include a chip and another discrete component.

According to a sixth aspect, an embodiment of this application provides a communication system. The communication system includes the terminal device and the network device that are configured to implement the related functions in the first aspect. Certainly, the communication system may include more terminal devices or more network devices.

According to a seventh aspect, this application provides a computer-readable storage medium. The computer-readable storage medium stores a computer program. When the computer program runs, the method in the first aspect is implemented.

According to an eighth aspect, a computer program product is provided. The computer program product includes computer program code. When the computer program code is run, the method in the first aspect is performed.

For beneficial effects of the second aspect to the eighth aspect and the implementations thereof, refer to the descriptions of the beneficial effects of the first aspect and the implementations thereof.

### BRIEF DESCRIPTION OF DRAWINGS

FIG. 1 is a diagram of an architecture of a communication system to which an embodiment of this application is applicable;
FIG. 2 is a diagram of an architecture of another communication system to which an embodiment of this application is applicable;
FIG. 3 is a diagram of a network architecture of still another communication system to which an embodiment of this application is applicable;
FIG. 4 is a diagram in which a plurality of reserved subcarriers for suppressing a PAPR overlap a subcarrier for carrying a reference signal according to an embodiment of this application;
FIG. 5 is a diagram of impact on PAPR suppression performance when a plurality of reserved subcarriers for suppressing a PAPR collide with a subcarrier for carrying a reference signal;
FIG. 6 is a schematic flowchart of a communication method according to an embodiment of this application;
FIG. 7 is a diagram in which two cyclic shifts are performed on a second subcarrier set according to an embodiment of this application;
FIG. 8 is a diagram of a fifth subcarrier set and a first subcarrier set according to an embodiment of this application;
FIG. 9 is a diagram of a target subcarrier set according to an embodiment of this application;
FIG. 10 is a diagram in which a second subcarrier set overlaps a first subcarrier set according to an embodiment of this application;
FIG. 11 is a diagram in which the second subcarrier set in FIG. 10 overlaps the first subcarrier set after a cyclic shift;
FIG. 12 is a diagram in which the second subcarrier set in FIG. 10 overlaps the first subcarrier set after two cyclic shifts;
FIG. 13 is a diagram in which a target subcarrier set is determined based on the second subcarrier set and the first subcarrier set in FIG. 10;
FIG. 14 is a diagram of PAPR suppression performance when the second subcarrier set and the first subcarrier set in FIG. 10 are used and PPAR suppression performance when a target subcarrier set determined in a first determining manner and the first subcarrier set are used;
FIG. 15 is a diagram of PAPR suppression performance when the second subcarrier set and the first subcarrier set in FIG. 10 are used and PPAR suppression performance when a target subcarrier set determined in a second determining manner and the first subcarrier set are used;
FIG. 16 is a diagram of PAPR suppression performance when the second subcarrier set and the first subcarrier set in FIG. 10 are used and PPAR suppression performance when a target subcarrier set determined in a third determining manner and the first subcarrier set are used;
FIG. 17 is a diagram of a structure of a communication apparatus according to an embodiment of this application; and
FIG. 18 is a diagram of another structure of a communication apparatus according to an embodiment of this application.

### DESCRIPTION OF EMBODIMENTS

Technical solutions provided in embodiments of this application may be applied to a new radio (new radio, NR) system, a long term evolution (Long term evolution, LTE) system, and a non-terrestrial network (non-terrestrial network, NTN) system, or may be further applied to a next generation mobile communication system or another similar communication system. The technical solutions provided in embodiments of this application may also be applied to a vehicle-to-everything (vehicle-to-everything, V2X) system, an internet of things (internet of things, IoT) system, and the like.

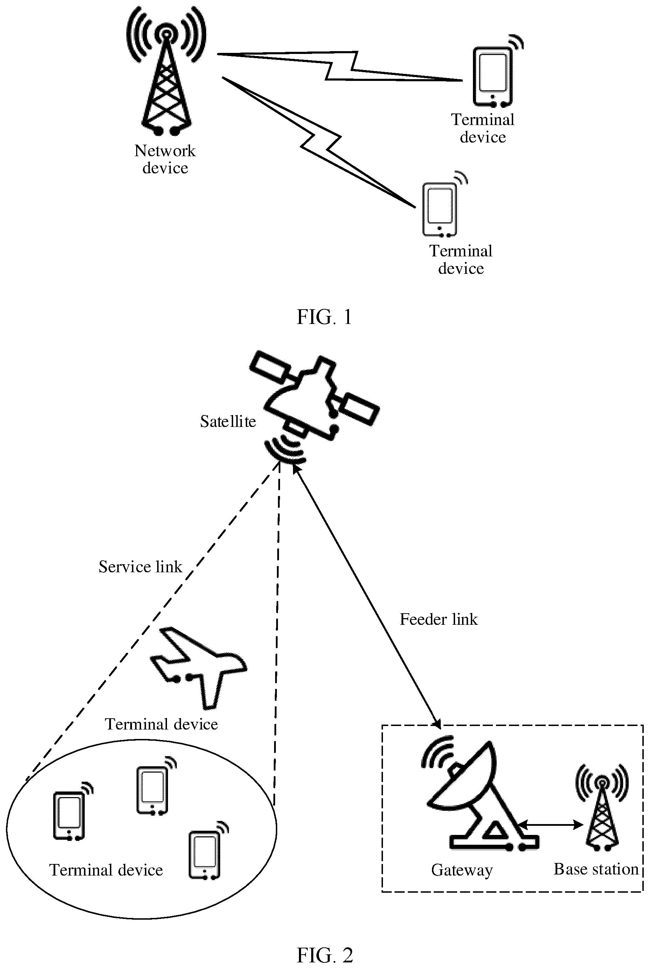

In an example, FIG. 1 is a diagram of a network architecture of a communication system to which an embodiment of this application is applicable. The communication system may include a network device and two terminal devices. The two terminal devices may be mobile terminal devices and/or any other suitable devices used for communication in a wireless communication system, and may be both connected to the network device. Both the two terminal devices can communicate with the network device. Certainly, a quantity of terminal devices in FIG. 1 is merely an example, and may be smaller or larger.

In embodiments of this application, the terminal device is a device having a wireless transceiver function, and may send a signal to the network device or receive a signal from the network device. The terminal device may include user equipment (user equipment, UE), and is sometimes referred to as a terminal, an access station, a UE station, a remote station, a wireless communication device, a user apparatus, or the like. The terminal device is configured to connect a person, an object, a machine, and the like, may be widely used in various scenarios, and includes, for example, but not limited to terminal devices in the following scenarios: cellular communication, device to device (device to device, D2D), V2X, machine-to-machine/machine-type communication (machine-to-machine/machine-type communication, M2M/MTC), IoT, virtual reality (virtual reality, VR), augmented reality (augmented reality, AR), industrial control (industrial control), self-driving (self-driving), telemedicine (remote medical), a smart grid (smart grid), smart furniture, smart office, smart wearable, smart transportation, a smart city (smart city), an uncrewed aerial vehicle, a robot, and the like.

By way of example, and not limitation, in embodiments of this application, the terminal device may be alternatively a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. If the various terminal devices described above are located in a vehicle (for example, placed in the vehicle or installed in the vehicle), the terminal devices may be all considered as vehicle-mounted terminal devices. For example, the vehicle-mounted terminal device is also referred to as an on-board unit (on-board unit, OBU). The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The vehicle uses the vehicle-mounted module, the vehicle-mounted assembly, the vehicle-mounted component, the vehicle-mounted chip, or the vehicle-mounted unit that is built in the vehicle, to implement a method in this application.

In embodiments of this application, a communication apparatus configured to implement a function of the terminal device may be the terminal device, or may be an apparatus that can support the terminal device in implementing the function, for example, a chip system. The apparatus may be installed in the terminal device. In the technical solutions provided in embodiments of this application, the technical solutions provided in embodiments of this application are described by using an example in which the apparatus configured to implement the function of the terminal device is the terminal device.

In embodiments of this application, the network device may be an access device through which the terminal device accesses a mobile communication system in a wireless manner, for example, includes an access network (access network, AN) device, for example, a base station. The network device may alternatively be a device that communicates with the terminal device through an air interface. The network device may include an evolved NodeB (evolved NodeB, eNB/e-NodeB) in an LTE system or a long term evolution-advanced (long term evolution-advanced, LTE-A) system; the network device may include a next generation NodeB (next generation NodeB, gNB) in an NR system; the network device may include an access node or the like in a wireless-fidelity (wireless-fidelity, Wi-Fi) system; or the network device may be a station (station), a relay station, a vehicle-mounted device, a future evolved public land mobile network (Public Land Mobile Network, PLMN) device, a device in a D2D network, a device in an M2M network, a device in an internet of things IoT network, a network device in a PLMN network, or the like. A specific technology and a specific device form used by the network device are not limited in embodiments of this application.

In addition, the base station in embodiments of this application may include a central unit (central unit, CU) and a distributed unit (distributed unit, DU), and a plurality of DUs may be centrally controlled by one CU. The CU and the DU may be divided based on a protocol layer function that the CU and the DU each have in a wireless network. For example, functions of a packet data convergence protocol (packet data convergence protocol, PDCP) layer and a protocol layer above the packet data convergence protocol layer are set on the CU, and functions of protocol layers below the PDCP layer, for example, a radio link control (radio link control, RLC) layer and a medium access control (medium access control, MAC) layer, are set on the DU. It should be noted that division into the protocol layers is merely an example, and there may be division of other protocol layers. A radio frequency apparatus may be remotely deployed and not placed in the DU, or may be integrated into the DU, or may be partially remotely disposed and partially integrated into the DU. This is not limited in embodiments of this application. In addition, in some embodiments, a control plane (control plan, CP) and a user plane (user plane, UP) of the CU may be separated into different entities for implementation, where the entities are respectively a control-plane CU entity (CU-CP entity) and a user-plane CU entity (CU-UP entity). The control plane CU-CP of the CU further includes a further split architecture. In other words, an existing CU-CP is further split into a CU-CP 1 and a CU-CP 2. The CU-CP 1 includes various radio resource management functions, and the CU-CP 2 includes only a radio resource control (radio resource control, RRC) function and a PDCP-C function (that is, a basic function of control plane signaling at a PDCP layer).

In embodiments of this application, a communication apparatus configured to implement a function of a network device or a terminal device may be the network device or the terminal device, or may be an apparatus that can support the network device or the terminal device in implementing the function, for example, a chip system. The apparatus may be installed in the network device or the terminal device. In the technical solutions provided in embodiments of this application, an example in which the apparatus configured to implement the function of the network device is the network device, and the apparatus configured to implement the function of the terminal device is the terminal device is used to describe the technical solutions provided in embodiments of this application.

In another example, FIG. 2 is a diagram of a network architecture of another communication system to which an embodiment of this application is applicable. The communication system includes a satellite, terminal devices, and a gateway. The satellite may be a highly elliptical orbit (highly elliptical orbit, HEO) satellite, a geostationary earth orbit satellite (geosynchronous earth orbit, GEO) satellite, a medium earth orbit (medium earth orbit, MEO) satellite, or a low-earth orbit (low-earth orbit, LEO) satellite. In addition, an NTN system may further include a high-altitude platform (high-altitude platform station, HAPS) and the like. This is not limited herein. The gateway (gateway) (or referred to as a terrestrial station, an earth station, a signal gateway station, or a gateway station) may be used to connect the satellite and a terrestrial base station gateway station/signal gateway station (gateway). One or more satellites may be connected to one or more terrestrial base stations via one or more gateways. This is not limited herein. The terminal devices include, for example, mobile phones, an airplane, and the like (these are used as examples in FIG. 2). A link between the satellite and the terminal device is referred to as a service link (service link), and a link between the satellite and the gateway is referred to as a feeder link (feeder link).

An operating mode of the satellite is not limited in this embodiment of this application. For example, the operating mode of the satellite may be a transparent (transparent) transmission mode, or a regenerative (regenerative) mode.

In the transparent transmission mode, the satellite, as an analog radio frequency repeater, has a relay forwarding function, can implement radio frequency conversion and amplification, and can transparently transmit or copy a signal between the base station and the terminal device. For example, a signal sent by the terminal device may be transparently transmitted by the satellite and forwarded by the gateway to the terrestrial base station. The gateway has a part or all functions of the base station. In this case, the gateway may be considered as a base station. It may be considered that a network element and the base station may be deployed together or separately. If the gateway and the base station are deployed separately, a delay of the feeder link includes a delay from the satellite to the gateway and a delay from the gateway to the base station.

In the regenerative mode, the satellite, as a base station for wireless communication, has a part or all functions of the base station, implements regeneration of signals received from the ground, and may understand and process these signals. For example, the satellite may be a base station carried on an artificial earth satellite or a high-altitude aircraft. For example, the base station may be an evolved NodeB (eNB) or a 5G base station (gNB). The gateway may forward signaling between the satellite (that is, the base station) and a core network.

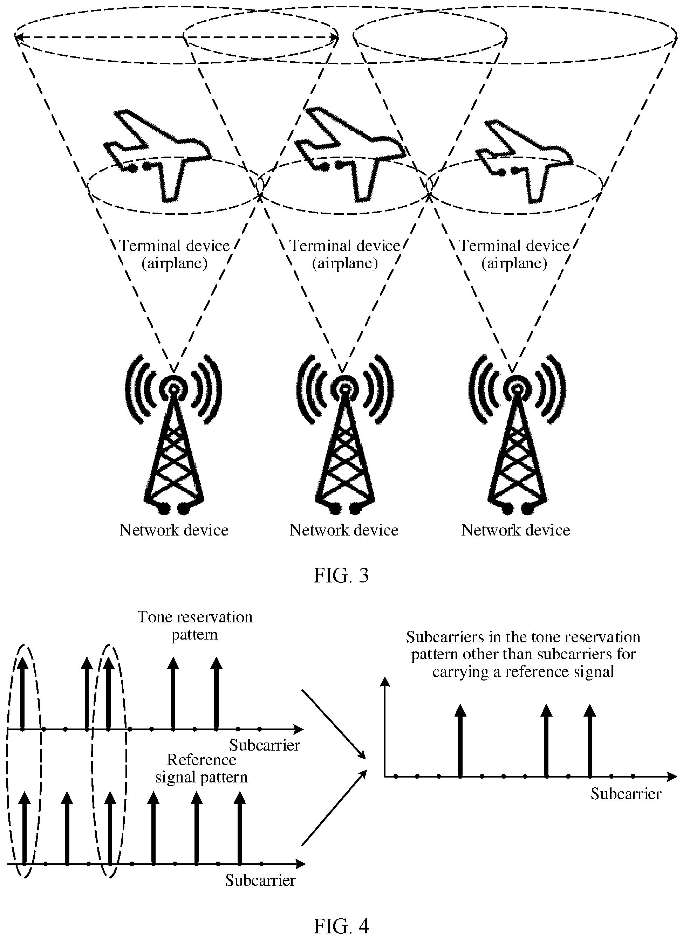

It may be understood that this embodiment of this application may also be applicable to an air to ground (air to ground, ATG) communication system. For example, FIG. 3 is a diagram of a network architecture of still another communication system to which an embodiment of this application is applicable. The communication system includes at least one network device and at least one high-altitude terminal device, for example, a high-altitude airplane and an on-board terminal device.

In embodiments of this application, unless otherwise specified, a quantity of nouns indicates "a singular noun or a plural noun", that is, "one or more". "At least one" means one or more, and "a plurality of" means two or more than two. "And/or" describes an association relationship for describing associated objects and indicates that three relationships may exist. For example, A and/or B may indicate the following cases: Only A exists, both A and B exist, and only B exists, where A and B may be singular or plural. The character "/" generally indicates an "or" relationship between the associated objects. For example, A/B indicates A or B. "At least one item (piece) of the following" or a similar expression thereof means any combination of these items, including a singular item (piece) or any combination of plural items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, a sequence, a time sequence, application scenarios, priorities, importance, or the like of the plurality of objects. For example, a "first subcarrier set" and a "second subcarrier set" indicate that there are two subcarrier sets, and do not indicate that the two subcarrier sets have different priorities, importance, or the like.

The foregoing describes the communication systems to which embodiments of this application are applicable. The following describes related technical content mainly related to embodiments of this application.

A satellite data processing capability and transmit power of a satellite device are limited due to manufacturing and transmission costs. Specifically, the satellite device is an energy- and power-limited device, and is sensitive to satellite power efficiency. In other words, power efficiency of the satellite device is expected to be improved as much as possible. In both terrestrial cellular network communication and NTN communication, it is required that a high power amplifier (high power amplifier, HPA) at a transmit end operates near a linear saturation region, to improve power efficiency of the HPA.

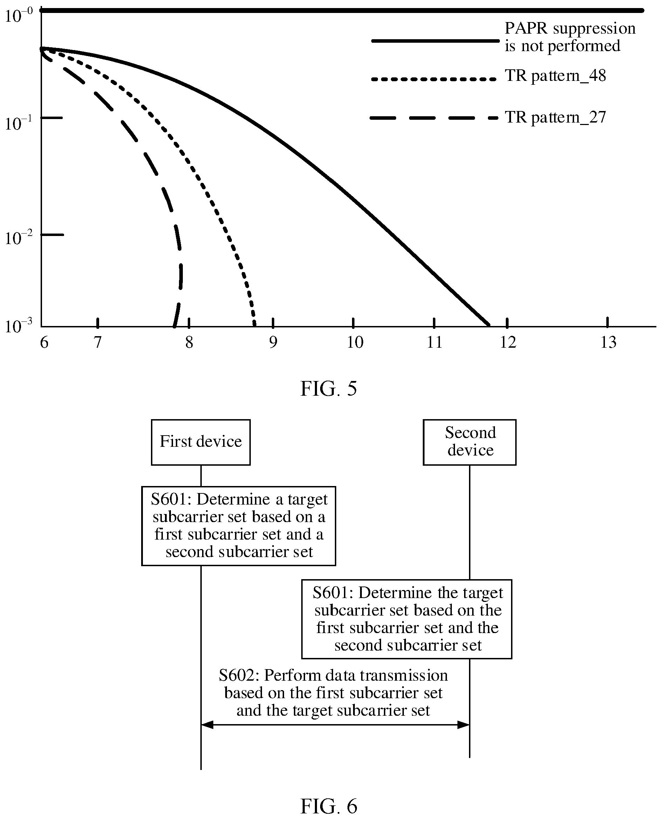

If a system performs data transmission through an orthogonal frequency division multiplexing (orthogonal frequency division multiplexing, OFDM) waveform or a waveform with a high PAPR characteristic, a high PAPR occurs. Because a PAPR of an OFDM signal is high, when the HPA operates near a saturation point, there is a specific probability that a signal input to the HPA enters a non-linear region, and non-linear distortion is generated. The non-linear distortion introduces in-band distortion and out-of-band radiation, which affects decoding accuracy of a receive end and causes interference to a user on an adjacent channel. Therefore, power back-off can be performed on the signal input to the HPA to reduce the non-linear distortion of the HPA as much as possible. That the power back-off is performed on the signal input to the HPA may be understood as that power of the signal input to the HPA is reduced. Although the power back-off performed on the signal input to the HPA may reduce the non-linear distortion of the HPA, power of a signal output by the HPA is reduced. This reduces transmit power and power efficiency of the HPA, and further reduces signal receiving power of the receive end and reduces a signal-to-noise ratio of the receive end. Therefore, a TR technology is proposed to suppress a PAPR of the OFDM waveform, or the like. The TR technology may be understood as that some reserved tones are reserved as carriers for suppressing a PAPR, and the reserved tones are for carrying a signal or energy for suppressing the PAPR. The reserved tone for suppressing the PAPR may include a plurality of subcarriers, or a set including these subcarriers may be referred to as a carrier set. A pattern (pattern) including subcarrier numbers respectively corresponding to the subcarriers included in the carrier set is referred to as a TR pattern (TR pattern). In other words, the TR pattern may indicate a set of reserved tones for suppressing the PAPR. A pattern including subcarrier numbers respectively corresponding to subcarriers for carrying an RS is referred to as an RS pattern (RS pattern). In other words, the RS pattern may indicate a set including subcarriers for carrying the RS. As shown FIG. 4, when a plurality of reserved subcarriers for suppressing a PAPR overlap subcarriers for carrying a reference signal, to ensure channel estimation and decoding performance, overlapping subcarriers are not used to carry a signal for suppressing the PAPR. In other words, subcarriers that overlap (or collide with) the subcarriers for carrying the reference signal are excluded from a set of reserved subcarriers, and a remaining subcarrier is used as a reserved tone for carrying the signal for suppressing the PAPR. In this way, the channel estimation and the decoding performance are ensured. However, PAPR suppression performance is affected, and the PAPR suppression performance is reduced. FIG. 5 shows impact on PAPR suppression performance when a TR pattern conflicts with an RS pattern. In FIG. 5, the TR pattern includes 48 subcarriers, and 21 of the 48 subcarriers are the same as 21 subcarriers in the RS pattern. If it is considered that the TR pattern conflicts with the RS pattern, the subcarriers included in the TR pattern and overlapping the RS pattern are not used to carry a signal for suppressing a PAPR, in other words, 27 of the 48 subcarriers in the original TR pattern other than the 21 overlapping subcarriers are used as TR. In FIG. 5, a TR pattern_48 represents the original TR pattern, and a TR pattern_27 represents a TR pattern excluding 21 subcarriers that overlap the RS pattern. It can be learned from FIG. 5 that when the TR pattern conflicts with the RS pattern, and the subcarriers included in the TR pattern and overlapping the RS pattern are not used to carry the signal for suppressing the PAPR, the PPAR suppression performance is lower than PAPR suppression performance when the conflict is not considered.

In this application, when one or more reserved subcarriers for suppressing the PAPR overlap a subcarrier for carrying a reference signal, the overlapping subcarrier may be replaced with another subcarrier as a reserved subcarrier. The another subcarrier is a subcarrier other than the plurality of reserved subcarriers for suppressing the PAPR and other than the subcarrier for carrying the reference signal. The overlapping subcarrier is replaced with the another subcarrier, so that the reserved subcarriers as many as possible are used to suppress the PAPR, thereby reducing or avoiding a PAPR suppression performance loss.

The following describes technical solutions provided in embodiments of this application with reference to accompanying drawings.

A communication method provided in embodiments of this application may be applied to any communication system, provided that a transmit end communicates with a receive end. In the following descriptions, the communication method is applied to any communication system shown in FIG. 1 to FIG. 3. The communication method provided in embodiments of this application may be applied to uplink transmission, or may be applied to downlink transmission. It should be understood that the uplink transmission and the downlink transmission are relative. For example, if transmission from a first communication apparatus to a second communication apparatus is the uplink transmission, transmission from the second communication apparatus to the first communication apparatus is the downlink transmission. Embodiments of this application are not limited to performing data transmission through an OFDM waveform. For example, data transmission may be performed through a DFT-S-OFDM waveform. That is, DFT precoding is first performed on data, and then data obtained by precoding is mapped to a frequency domain data subcarrier.

A type of a reference signal is not limited in embodiments of this application. For example, the reference signal may be a phase tracking reference signal (phase tracking reference signal, PTRS), a demodulation reference signal (demodulation reference signal, DMRS), a channel state information-reference signal (channel state information-reference signal, CSI-RS), a tracking reference signal (tracking reference signal, TRS), or a sounding reference signal (sounding reference signal, SRS). In the following descriptions, "when" and "in a case of" belong to a same concept, and may be interchangeable unless otherwise specified. In this specification, mod(a, b) indicates a mod operation, that is, a modulo operation, and indicates a modulo operation of a on b. d=circshift(a, b, c) indicates that a value d is obtained by performing a cyclic shift or a cyclic shift based on a periodicity c after a value a is shifted by a value b. It should be noted that the communication method provided in embodiments of this application is applicable to suppressing a PAPR, and may be applicable to suppressing an instantaneous-to-average power ratio (instantaneous-to-average power ratio, IAPR). Unless otherwise specified, the "PAPR" and the "IAPR" in embodiments of this application may be interchangeable.

In embodiments of this application, a subcarrier in a first subcarrier set is used to carry a reference signal, and the first subcarrier set may also be referred to as an RS pattern. That is, the RS pattern may indicate a set including the subcarrier for carrying the RS. A subcarrier in a second subcarrier set is used to carry a signal or energy for suppressing a PAPR, and the second subcarrier set may also be referred to as a TR pattern. That is, the TR pattern may indicate a set including a subcarrier for carrying the signal for suppressing the PAPR. A subcarrier in a target subcarrier set is also used to carry the signal for suppressing the PAPR. To distinguish from the second subcarrier set, in this specification, the second subcarrier set is also referred to as an original TR pattern (or an original TR set or an original reserved tone set), and the target subcarrier set is referred to as a target TR pattern (or a target TR set or a target reserved tone set).

Optionally, the original TR pattern may be pre-stipulated or preconfigured. Alternatively, the original TR pattern is obtained by extending a short sequence according to a nesting characteristic (rule), or the original TR pattern is obtained by shortening a long sequence according to a nesting characteristic (rule). Alternatively, the original TR pattern is obtained by extending a set with a small quantity of carriers according to a nesting characteristic (rule), or is obtained by shrinking a set with a large quantity of carriers according to a nesting characteristic (rule). Alternatively, the original TR pattern may be configured by a network device for a terminal device. Unless otherwise specified, in this specification, the first subcarrier set and the RS pattern may be interchangeable, the second subcarrier set and the original TR pattern may be interchangeable, and the target subcarrier set and the target TR pattern may be interchangeable. A subcarrier in a fourth subcarrier set is neither used to carry the RS nor used to carry the signal for suppressing the PAPR.

In embodiments of this application, if the first subcarrier set and the second subcarrier set have a same subcarrier, a communication apparatus may determine the target subcarrier set. The communication apparatus determines the target subcarrier set in a plurality of manners. Before the plurality of determining manners are specifically described, several related subcarrier sets and sequence number difference sets are first described.

A fifth subcarrier set is obtained by performing K cyclic shifts on the second subcarrier set, K is greater than or equal to 1 and is less than or equal to a largest cyclic shift quantity (which may also be referred to as a largest cyclic shift value). The largest cyclic shift quantity or the largest cyclic shift value may be agreed on or preconfigured between a first device and a second device. If the first device is a terminal device, the largest cyclic shift quantity or the largest cyclic shift value may alternatively be sent by a network device to the first device. Alternatively, the largest cyclic shift quantity is predefined. For example, the largest cyclic shift quantity is a reciprocal of an RS density, that is, a 1/RS density. In embodiments of this application, the "K cyclic shifts" indicates K different cyclic shift values of cyclic shifts. A cyclic shift value corresponding to one of the "K cyclic shifts" may be equal to 0. In this case, it may also be considered that no cyclic shift is performed. It may be understood that a plurality of subcarrier sets obtained by performing different times of cyclic shifts on the second subcarrier set are also different. The fifth subcarrier set in embodiments of this application is a subcarrier set in the plurality of subcarrier sets that has a smallest quantity of subcarriers that overlap a first subcarrier set.

An updated subcarrier set (or a new subcarrier set) is a subcarrier set obtained by replacing a subcarrier in a subcarrier set. For example, if one or more subcarriers in the subcarrier set are replaced, or a subcarrier is newly added to the subcarrier set, a subcarrier set obtained by replacing the subcarrier or newly adding the subcarrier is referred to as an updated subcarrier set. The updated subcarrier set is based on two consecutive times of replacement or addition of subcarriers. A subcarrier set obtained by replacing or adding a subcarrier for the i^{th} time is considered as a subcarrier set before update, and a subcarrier set obtained through replacement or addition for the (i+1)^{th} time is considered as the updated subcarrier set. i is an integer greater than or equal to 1. In other words, an updated subcarrier set obtained for the (i+1)^{th} time is obtained by replacing or adding one or more subcarriers in an updated subcarrier set obtained for the i^{th} time. For example, an updated fifth subcarrier set obtained for the (i+1)^{th} time is obtained by replacing or adding one or more subcarriers in an updated fifth subcarrier set obtained for the i^{th} time. It should be understood that a subcarrier set obtained by replacing or adding a subcarrier for the first time is an updated original subcarrier set, and an original subcarrier set is denoted as a subcarrier set without subcarrier replaced or subcarrier newly added.

A third subcarrier set is a subcarrier set obtained by excluding X subcarriers that overlap the first subcarrier set from the fifth subcarrier set. Correspondingly, an updated third subcarrier set is a subcarrier set obtained by excluding a subcarrier that overlaps the first subcarrier set from an updated fifth subcarrier set.

The fourth subcarrier set is a set including a subcarrier in all subcarriers in a bandwidth of the first device other than a subcarrier included in the third subcarrier set and the first subcarrier set. Correspondingly, an updated fourth subcarrier set is a set including a subcarrier in all the subcarriers in the bandwidth of the first device other than a subcarrier included in the updated third subcarrier set and the first subcarrier set.

A sixth subcarrier set is a subcarrier set obtained by excluding M subcarriers that overlap the first subcarrier set from the second subcarrier set.

Similar to the updated fifth subcarrier set, an updated sixth subcarrier set is a subcarrier set obtained by replacing or adding a subcarrier set in the sixth subcarrier set before update.

A seventh subcarrier set is a set including a subcarrier in all the subcarriers in the bandwidth of the first device other than a subcarrier included in the sixth subcarrier set and the first subcarrier set. Correspondingly, an updated seventh subcarrier set is a set including a subcarrier in all the subcarriers in the bandwidth of the first device other than a subcarrier included in the updated sixth subcarrier set and the first subcarrier set.

A first sequence number difference set is obtained by excluding a sequence number difference in a third sequence number difference set from a second sequence number difference set. The second sequence number difference set includes a difference between a sequence number of each subcarrier in the fourth subcarrier set and a sequence number of each subcarrier in the third subcarrier set. The third sequence number difference set includes a difference between sequence numbers of subcarriers in the third subcarrier set.

An updated first sequence number difference set is obtained by excluding a sequence number difference in an updated third sequence number difference set from an updated second sequence number difference set. The updated second sequence number difference set includes a difference between a sequence number of each subcarrier in the updated fourth subcarrier set and a sequence number of each subcarrier in the updated third subcarrier set. The updated third sequence number difference set includes a difference between sequence numbers of subcarriers in the updated third subcarrier set.

A fourth sequence number difference set is obtained by excluding a sequence number difference in a sixth sequence number difference set from a fifth sequence number difference set. The fifth sequence number difference set includes a difference between a sequence number of each subcarrier in the seventh subcarrier set and a sequence number of each subcarrier in the sixth subcarrier set. The sixth sequence number difference set includes a difference between sequence numbers of subcarriers in the sixth subcarrier set.

An updated fourth sequence number difference set is obtained by excluding a sequence number difference in an updated fifth sequence number difference set from an updated sixth sequence number difference set. The updated fifth sequence number difference set includes a difference between a sequence number of each subcarrier in the updated seventh subcarrier set and a sequence number of each subcarrier in the updated sixth subcarrier set. The updated sixth sequence number difference set includes a difference between sequence numbers of subcarriers in the updated sixth subcarrier set.

It should be noted that in embodiments of this application, a sequence number difference is a modulus value (an absolute value) of the sequence number difference. For ease of description, the sequence number difference is used uniformly. To be specific, unless otherwise specified, the "sequence number difference" and the "modulus value of the sequence number difference" may be interchangeable.

FIG. 6 is a schematic flowchart of a communication method according to an embodiment of this application. In the following descriptions, an example in which the communication method is performed by a first device and a second device is used. The first device is a terminal device, and the second device is a network device. Alternatively, the first device is a network device, and the second device is a terminal device.

S601: The first device determines a target subcarrier set based on a first subcarrier set and a second subcarrier set.

When the first subcarrier set and the second subcarrier set have an intersection set, for example, the first subcarrier set and the second subcarrier set have M same subcarriers, a subcarrier for carrying an RS conflicts with a subcarrier for carrying a signal for suppressing a PAPR. In this case, the first device may re-determine a set including a subcarrier for carrying the signal for suppressing the PAPR, for example, referred to as the target subcarrier set, to reduce or avoid the conflict, and improve PAPR suppression performance. For example, the target subcarrier set and the first subcarrier set have Y same subcarriers, where Y is greater than or equal to 0 and less than M, and M is a positive integer. Because a quantity of subcarriers in the target subcarrier set for carrying the signal for suppressing the PAPR is greater than a quantity of subcarriers in the second subcarrier set for carrying the signal for suppressing the PAPR, the PAPR suppression performance can be improved.

Similar to the first device, the second device may also determine the target subcarrier set based on the first subcarrier set and the second subcarrier set (as shown in FIG. 6, the second device may also perform S601). A manner in which the second device determines the target subcarrier set is the same as a manner in which the first device determines the target subcarrier set. If the first device is the terminal device, and the second device is the network device, the second device may send information about the first subcarrier set and/or information about the second subcarrier set to the first device. Correspondingly, the first device receives the information about the first subcarrier set and/or the information about the second subcarrier set that are/is sent by the second device. The information about the first subcarrier set may be the first subcarrier set, or may be an index of the first subcarrier set. The information about the second subcarrier set may be the second subcarrier set, or may be an index of the second subcarrier set. The following describes how the first device and the second device determine the target subcarrier set, and an example in which the first device determines the target subcarrier set is used.

That the first device determines the target subcarrier set includes but is not limited to the following four determining manners. The following sequentially describes the four determining manners.

**First determining manner:** A subcarrier included in a fifth subcarrier set and overlapping the first subcarrier set is replaced with a subcarrier in a fourth subcarrier set, to obtain a target subcarrier set. It is assumed that the fifth subcarrier set and the first subcarrier set have X same subcarriers, and X is an integer greater than or equal to 1. Initially, one or more of the X subcarriers in the fifth subcarrier set may be replaced with the subcarrier in the fourth subcarrier set. An updated fifth subcarrier set is obtained by replacing the one or more subcarriers in the fifth subcarrier set. If an updated fifth subcarrier set obtained through replacement for the first time and the first subcarrier set have X1 same subcarriers, and X1 is an integer greater than 1, a subcarrier included in the updated fifth subcarrier set and overlapping the first subcarrier set is replaced with a subcarrier in an updated fourth subcarrier set. The rest is deduced by analogy until all the X subcarriers in the original fifth subcarrier set are replaced, and an obtained updated fifth subcarrier set is the target subcarrier set. Optionally, L subcarriers in the X subcarriers may be replaced to obtain target subcarriers, where L<X.

When determining the target subcarrier set, the first device may first perform K cyclic shifts on the second subcarrier set, to obtain the fifth subcarrier set.

In an example, the subcarrier in the fifth subcarrier set and the subcarrier in the second subcarrier set may satisfy: reserved_tones_new=circshift(reserved_tones_old, Δk, IFFT_length). reserved_tones_old indicates a sequence number (also referred to as an index number) of a subcarrier before a cyclic shift, and reserved_tones_new indicates a sequence number of the subcarrier after the cyclic shift. Δk indicates a cyclic shift value. It may be agreed on that Δk is greater than or equal to 0, or it may be agreed on that Δk is less than or equal to 0. IFFT_length indicates a cyclic shift periodicity for generating the fifth subcarrier set. IFFT_length may be determined based on a bandwidth or a length of inverse fast Fourier transform (inverse fast Fourier transform, IFFT) for generating an OFDM signal. For example, IFFT_length is a length value of the IFFT used by the first device. Δk may be determined, and a cyclic shift is performed on the second subcarrier set according to Δk, to obtain the fifth subcarrier set.

Alternatively, it is assumed that subcarrier sequence numbers start from 1, and the subcarrier in the fifth subcarrier set and the subcarrier in the second subcarrier set may satisfy: reserved_tones_new=mod(reserved_tones_old+Δk-1, IFFT_length)+1. It should be understood that subcarrier sequence numbers start from 0, and the subcarrier in the fifth subcarrier set and the subcarrier in the second subcarrier set may satisfy: reserved_tones_new=mod(reserved_tones_old+Δk, IFFT_length).

In a possible implementation, the subcarrier in the fifth subcarrier set is located in a bandwidth used by the first device. In other words, if the subcarrier set obtained by performing the K cyclic shifts on the second subcarrier set includes a subcarrier located outside the bandwidth used by the first device, the subcarrier located outside the bandwidth used by the first device is excluded.

If a plurality of subcarrier sets obtained by performing different times (or different cyclic shift values) of cyclic shifts on the second subcarrier set each have a same quantity of subcarriers that overlap the first subcarrier set, in other words, there are a plurality of subcarrier sets with a smallest quantity of subcarriers that overlap the first subcarrier set, the fifth subcarrier set is one of the plurality of subcarrier sets.

In an example, the fifth subcarrier set is a subcarrier set corresponding to a smallest cyclic shift quantity in the plurality of subcarrier sets. For example, a cyclic shift whose cyclic shift value is K1 is performed on the second subcarrier set to obtain a subcarrier set 1; a cyclic shift whose cyclic shift value is K2 is performed on the second subcarrier set to obtain a subcarrier set 2; and a cyclic shift whose cyclic shift value is K3 is performed on the second subcarrier set to obtain a subcarrier set 3. It is assumed that the subcarrier set 1, the subcarrier set 2, and the subcarrier set 3 each overlap the first subcarrier set by P subcarriers. If K1 is less than K2, and K2 is less than K3, the fifth subcarrier set is the subcarrier set 1. In other words, it is agreed on that the fifth subcarrier set is the subcarrier set that is in the plurality of subcarrier sets with the smallest quantity of overlapping subcarriers after the cyclic shifts and that corresponds to a smallest cyclic shift value.

In another example, the fifth subcarrier set is a subcarrier set corresponding to a largest cyclic shift value in the plurality of subcarrier sets. For example, a cyclic shift whose cyclic shift value is K1 is performed on the second subcarrier set to obtain a subcarrier set 1; a cyclic shift whose cyclic shift value is K2 is performed on the second subcarrier set to obtain a subcarrier set 2; and a cyclic shift whose cyclic shift value is K3 is performed on the second subcarrier set to obtain a subcarrier set 3. It is assumed that the subcarrier set 1, the subcarrier set 2, and the subcarrier set 3 each overlap the first subcarrier set by P subcarriers. If K1 is less than K2, and K2 is less than K3, the fifth subcarrier set is the subcarrier set 3. Optionally, it may be agreed on that a subcarrier set with a smallest cyclic shift value is selected from a subcarrier set with a smallest quantity of overlapping subcarriers as the fifth subcarrier set.

In still another example, the fifth subcarrier set is an x^{th} subcarrier set in the plurality of subcarrier sets, the plurality of subcarrier sets are sorted in descending order or ascending order of cyclic shift values, and x indicates a cyclic shift set selection value. For example, a cyclic shift whose cyclic shift value is K1 is performed on the second subcarrier set to obtain a subcarrier set 1; a cyclic shift whose cyclic shift value is K2 is performed on the second subcarrier set to obtain a subcarrier set 2; and a cyclic shift whose cyclic shift value is K3 is performed on the second subcarrier set to obtain a subcarrier set 3. It is assumed that the subcarrier set 1, the subcarrier set 2, and the subcarrier set 3 each overlap the first subcarrier set by P subcarriers. If K1 is less than K2, K2 is less than K3, and x=2, the fifth subcarrier set is the subcarrier set 2. If K1 is less than K2, K2 is less than K3, and x=3, the fifth subcarrier set is the subcarrier set 3. Optionally, the cyclic shift set selection value x may be agreed on or preset between the network device and the terminal device, or may be sent by the network device to the terminal device.

In yet another example, the fifth subcarrier set may be a subcarrier set with a smallest modulus value |Δk| of the cyclic shift value in the plurality of subcarrier sets.

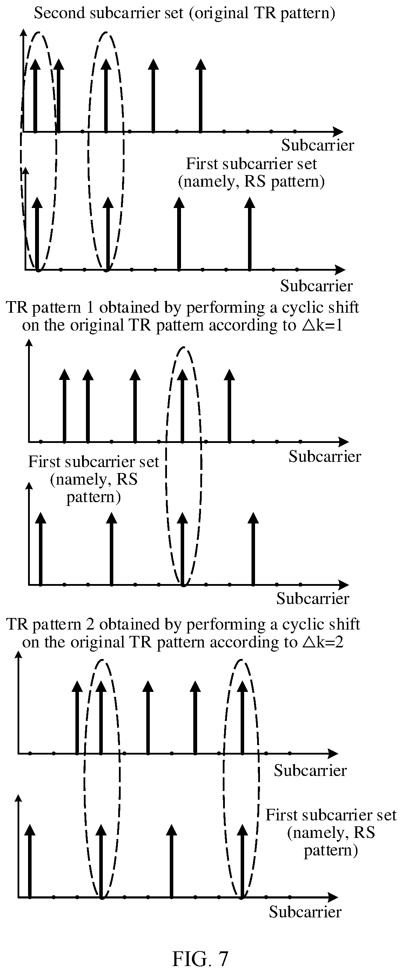

For ease of understanding, a specific example is used to describe how to obtain the fifth subcarrier set based on the second subcarrier set. FIG. 7 is a diagram in which two cyclic shifts are performed on the second subcarrier set (that is, an original TR pattern). In FIG. 7, an example in which subcarrier sequence numbers start from 1 and sequence numbers of subcarriers included in the second subcarrier set are {1, 2, 4, 6, 8} is used. In addition, in FIG. 7, sequence numbers of subcarriers included in the first subcarrier set are {1, 4, 7, 10}, that is, an RS density is 1/3, indicating that one RS subcarrier exists in every three subcarriers. It is assumed that a largest cyclic shift quantity is 3. Dashed lines in FIG. 7 show overlapping subcarriers. Initially, subcarriers included in {1, 4, 7, 10} and overlapping {1, 2, 4, 6, 8} are a subcarrier 1 and a subcarrier 4, that is, the first subcarrier set and the second subcarrier set have two same subcarriers. It may alternatively be understood that when a cyclic shift value is 0 (Δk=0), a quantity of overlapping subcarriers is 2.

Assuming that a cyclic shift of 1 bit (Δk=1) is performed on the second subcarrier set, in other words, the cyclic shift value is 1, and a cyclic shift periodicity is 12, it may be obtained that a subcarrier set (that is, a TR pattern 1 in FIG. 7) includes {2, 3, 5, 7, 9}. A subcarrier included in {2, 3, 5, 7, 9} and overlapping {1, 4, 7, 10} is a subcarrier 7, that is, there is one same subcarrier. Assuming that a cyclic shift of 2 bits (Δk=2) is performed on the second subcarrier set, it may be obtained that a subcarrier set (that is, a TR pattern 2 in FIG. 7) includes {3, 4, 6, 8, 10}. Subcarriers included in {3, 4, 6, 8, 10} and overlapping {1, 4, 7, 10} are the subcarrier 4 and a subcarrier 10, that is, there are two same subcarriers. Therefore, a quantity of overlapping subcarriers is the smallest when Δk=1, and the fifth subcarrier set is {2, 3, 5, 7, 9}.

After the fifth subcarrier set is determined, the target subcarrier set may be determined. A process of determining the target subcarrier set may also be considered as sequentially replacing a subcarrier included in the fifth subcarrier set and overlapping the first subcarrier set with a subcarrier not for carrying an RS and a subcarrier not for suppressing a PAPR channel.

For example, if the fifth subcarrier set and the first subcarrier set have a same subcarrier, the subcarrier included in the fifth subcarrier set and overlapping the first subcarrier set may be replaced with a subcarrier in the fourth subcarrier set. The example in FIG. 7 is still used. The fifth subcarrier set and the first subcarrier set have the same subcarrier 7. The subcarrier 7 in the fifth subcarrier set may be replaced with the subcarrier in the fourth subcarrier set, to avoid overlapping (conflicting with) a subcarrier in the first subcarrier set.

If the fifth subcarrier set and the first subcarrier set have a plurality of same subcarriers, one of the subcarriers included in the fifth subcarrier set and overlapping the first subcarrier set may be initially replaced with a subcarrier in the fourth subcarrier set, to obtain an updated fifth carrier set. Correspondingly, an updated fourth subcarrier set is also obtained. Then, a subcarrier included in the fifth subcarrier set and overlapping the first subcarrier set continues to be replaced with a subcarrier in the updated fourth subcarrier set. The rest is deduced by analogy until there is no intersection set of a finally obtained updated fifth carrier set and the first subcarrier set.

Optionally, in actual use, the first device may select X_replace subcarriers in the fourth subcarrier set as reserved subcarriers based on a PAPR suppression requirement, X_replace indicates a replacement reserved tone value, and X_replace≥0. For example, when X_replace=X-2, the PAPR suppression requirement can be met. In this case, the X _replace subcarriers are selected from the fourth subcarrier set as the reserved subcarriers. Optionally, the replacement reserved tone value X_replace may be agreed on or preset between the network device and the terminal device, or may be sent by the network device to the terminal device.

In a possible implementation, during initial replacement, a subcarrier with a largest quantity of subcarrier sequence number differences in the fourth subcarrier set may be preferentially selected to replace the subcarrier included in the fifth subcarrier set and overlapping the first subcarrier set. Similarly, during subsequent replacement, a subcarrier with a largest quantity of subcarrier sequence number differences in an updated fourth subcarrier set may be preferentially selected to replace a subcarrier included in an updated fifth subcarrier set and overlapping the first subcarrier set. The following describes how to perform replacement by using an example in which a first subcarrier in the fourth subcarrier set is preferentially selected to replace the subcarrier included in the fifth subcarrier set and overlapping the first subcarrier set. It should be understood that the first subcarrier corresponds to a largest quantity of sequence number differences, and the sequence number difference belongs to a first sequence number difference set. The following describes how to determine the first subcarrier.

For ease of description, the first subcarrier set is denoted as a set Y, a third subcarrier set is denoted as a set A, and the fourth subcarrier set is denoted as a set C. It should be understood that any element a in the set A belongs to the fifth subcarrier set, but does not belong to the set Y, that is, a∈the fifth subcarrier set and a∉Y. The set C is a set including a subcarrier in a bandwidth used by the first device other than the set A and the set Y.

The first device may calculate a modulus value of a difference between sequence numbers of subcarriers in the set A, to obtain a set B (also referred to as a third sequence number difference set in this specification). The example in FIG. 7 is still used, and it can be learned that the set B is {1, 2, 3, 4, 6, 7}. The first device may calculate a modulus value of a difference between a sequence number of each subcarrier in the set C and a sequence number of each subcarrier in the set A, to obtain a set D (also referred to as a second sequence number difference set in this specification). A set E (also referred to as the first sequence number difference set in this specification) is obtained by excluding, from the set D, an element that is the same as that in the set B. The first device may select a subcarrier corresponding to a largest quantity of elements in the set E from the set C as the first subcarrier. In other words, a subcarrier that is in the set C and that corresponds to a largest quantity of sequence number differences is selected as the first subcarrier.

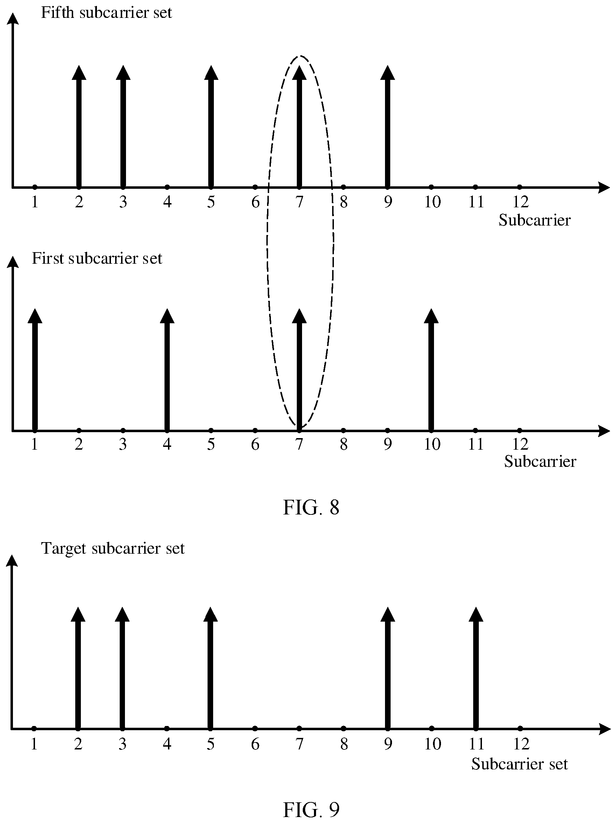

For example, FIG. 8 is a diagram of the fifth subcarrier set and the first subcarrier set. In FIG. 8, an example in which the bandwidth used by the first device includes 12 subcarriers and subcarrier sequence numbers start from 1 is used. A dashed line in FIG. 8 shows overlapping subcarriers. Sequence numbers of subcarriers included in the first subcarrier set (namely, a set Y) are {1, 4, 7, 10}. Sequence numbers of subcarriers included in the fifth subcarrier set are {2, 3, 5, 7, 9}. Sequence numbers of subcarriers included in the third subcarrier set (namely, a set A) are {2, 3, 5, 9}, and sequence numbers of subcarriers included in the fourth subcarrier set (namely, a set C) are {6, 8, 11, 12}.

Distances between a subcarrier 6 in the set C and the subcarriers in the set A are respectively 4, 3, 1, and 3. After a duplicate distance is excluded, a set D including the distances between the subcarrier 6 and the subcarriers in the set A is {1, 3, 4}. A set E that corresponds to the subcarrier 6 and that is obtained by excluding an element in a set B from the set D is an empty set Φ. Similarly, a set D including distances between a subcarrier 8 and the subcarriers in the set A is {1, 3, 5, 6}. A set E that corresponds to the subcarrier 8 and that is obtained by excluding an element in a set B from the set D is {5}. A set D including distances between a subcarrier 11 and the subcarriers in the set A is {2, 6, 8, 9}. A set E that corresponds to the subcarrier 11 and that is obtained by excluding an element in a set B from the set D is {8, 9}. A set D including distances between a subcarrier 12 and the subcarriers in the set A is {3, 7, 9, 10}. A set E that corresponds to the subcarrier 11 and that is obtained by excluding an element in a set B from the set D is {9, 10}. It can be learned that quantities of sequence number differences respectively corresponding to the subcarrier 6, the subcarrier 8, the subcarrier 11, and the subcarrier 12 are sequentially 0, 1, 2, and 2. In other words, quantities of sequence number differences respectively corresponding to the subcarrier 11 and the subcarrier 12 are the largest. The first device may select the subcarrier 11 or the subcarrier 12 to replace the subcarrier included in the fifth subcarrier set and overlapping the first subcarrier set, that is, the subcarrier 7. In this way, the target subcarrier set may be obtained. To be specific, sequence numbers of subcarriers included in the target subcarrier set are {2, 3, 5, 9, 11} or {2, 3, 5, 9, 12}. For example, as shown in FIG. 9, an example in which the sequence numbers of the subcarriers included in the target subcarrier set are {2, 3, 5, 9, 11} is used.

It should be noted that the foregoing uses an example in which the set D excludes the element in the set B, to be specific, the set E corresponding to the subcarriers in the set C is used to select the first subcarrier. In a possible implementation, the set D does not need to exclude the element in the set B, to be specific, the set D corresponding to the subcarriers in the set C is used to select the first subcarrier. The foregoing examples are still used. The set D including the distances between the subcarrier 6 and the subcarriers in the set A is {1, 3, 4}. The set D including the distances between the subcarrier 8 and the subcarriers in the set A is {1, 3, 5, 6}. The set D including the distances between the subcarrier 11 and the subcarriers in the set A is {2, 6, 8, 9}. The set D including the distances between the subcarrier 12 and the subcarriers in the set A is {3, 7, 9, 10}. It can be learned that quantities of sequence number differences respectively corresponding to the subcarrier 6, the subcarrier 8, the subcarrier 11, and the subcarrier 12 are sequentially 3, 4, 4, and 4. In other words, quantities of sequence number differences respectively corresponding to the subcarrier 8, the subcarrier 11, and the subcarrier 12 are the largest. The first device may select the subcarrier 8, the subcarrier 11, or the subcarrier 12 as the first subcarrier to replace the subcarrier 7, to obtain the target subcarrier set. To be specific, the sequence numbers of the subcarriers included in the target subcarrier set may be {2, 3, 5, 8, 9}, {2, 3, 5, 11, 9}, or {2, 3, 5, 12, 9}.

When a plurality of subcarriers in the fourth subcarrier set correspond to a same quantity of sequence number differences, and the quantity of sequence number differences is the largest, it may be agreed on that a specific subcarrier in the plurality of subcarriers is the first subcarrier. For example, a subcarrier corresponding to a largest quantity of sequence number differences in the fourth subcarrier set includes at least two third subcarriers, and the first subcarrier belongs to the at least two third subcarriers. The first subcarrier may meet any one of the following conditions.

A sequence number of the first subcarrier is a smallest sequence number in sequence numbers of the at least two third subcarriers; a sequence number of the first subcarrier is a largest sequence number in sequence numbers of the at least two third subcarriers; or the first subcarrier is a y^{th} subcarrier in the at least two third subcarriers, where y indicates a subcarrier selection value. Sequence numbers of the at least two third subcarriers are sorted in ascending order or descending order. Optionally, the subcarrier selection value y may be agreed on or preset between the network device and the terminal device, or may be sent by the network device to the terminal device.

It should be noted that in FIG. 8, an example in which the fifth subcarrier set and the first subcarrier set have a same subcarrier set is used. If the fifth subcarrier set and the first subcarrier set have X same subcarriers, and X is greater than or equal to 2, when the X subcarriers are replaced, one or more of the X subcarriers may be replaced once, in other words, X_once subcarriers in the X subcarriers may be replaced once, and X_once indicates a value of a quantity of subcarriers that are replaceable once. If an updated fifth subcarrier set obtained through the replacement once and the first subcarrier set still have an overlapping subcarrier, the subcarrier included in an updated fifth subcarrier and overlapping the first subcarrier set continues to be replaced still according to the method of the replacement for the first time. The rest is deduced by analogy until all the X overlapping subcarriers are replaced. Alternatively, when a PAPR suppression performance loss is allowed, a part of the X overlapping subcarriers may be replaced. Optionally, the value of the quantity of subcarriers that are replaceable once X_once may be agreed on or preset between the network device and the terminal device, or may be sent by the network device to the terminal device.

For example, during the foregoing initial replacement, a subcarrier that meets a largest quantity of sequence number differences is selected from the set C to replace the subcarrier included in the fifth subcarrier set and overlapping the first subcarrier set. In an alternative solution, during the initial replacement, z subcarriers may be selected from the set C according to a preset rule to replace the subcarrier included in the fifth subcarrier set and overlapping the first subcarrier set, where z indicates a subcarrier selection quantity value. For example, first z subcarriers in the set C are selected in ascending order of subcarrier sequence numbers. Alternatively, z subcarriers may be selected from the set C at an equal spacing to replace the subcarrier included in the fifth subcarrier set and overlapping the first subcarrier set. z may be a quantity of subcarriers included in the fifth subcarrier set and overlapping the first subcarrier set. Alternatively, z may be a value agreed on by the first device and the second device, or z may be a value configured by the network device for the terminal device.

In a possible implementation, a replacement threshold may be predefined to determine whether to continue to replace a subcarrier included in an obtained updated fifth subcarrier set and overlapping the first subcarrier set. When a quantity of subcarriers that have been replaced is less than the replacement threshold, the first device performs next replacement. When a quantity of replaced subcarriers is equal to the replacement threshold, the first device determines to stop replacement. The replacement threshold may be determined based on the X subcarriers included in the fifth subcarrier set and overlapping the first subcarrier set. For example, the replacement threshold is equal to X. Certainly, the replacement threshold may alternatively be agreed on by the first device and the second device, or the replacement threshold may be a value indicated by the network device to the terminal device.

In a possible implementation, a length threshold may be predefined to determine whether to continue to replace a subcarrier included in an obtained updated fifth subcarrier set and overlapping the first subcarrier set. When a length (that is, a quantity of included subcarriers) of an updated third subcarrier set obtained through replacement once is less than the length threshold, the first device performs next replacement. When a length of an updated third subcarrier set obtained through replacement once is equal to the length threshold, the first device determines to stop replacement. The length threshold may be a quantity of subcarriers included in the second subcarrier set, may be agreed on by the first device and the second device, or the length threshold may be a value indicated by the network device to the terminal device.

It may be understood that the updated fifth subcarrier set is obtained through the previous replacement, and correspondingly, an updated third subcarrier set (namely, an updated set A) may be obtained based on the updated fifth subcarrier set, and an updated fourth subcarrier set (that is, an updated set C) may be obtained based on the updated third subcarrier set. During next replacement, the subcarrier included in the updated fifth subcarrier and overlapping the first subcarrier is replaced with a subcarrier in the updated fourth subcarrier set until a quantity of replaced subcarriers is equal to the replacement threshold. The solution for the previous replacement is still used for the next replacement. In addition, during the next replacement, the subcarrier included in the updated fifth subcarrier and overlapping the first subcarrier set is replaced with a subcarrier in the updated fourth subcarrier set. It may be understood that a manner of determining the subcarrier is the same as a manner of determining the first subcarrier, to be specific, the subcarrier corresponds to a largest quantity of sequence number differences, and the sequence number difference belongs to an updated first sequence number difference sequence number.

If a finally obtained target subcarrier set and the first subcarrier set have an overlapping subcarrier, for example, the target subcarrier set and the first subcarrier set include w same subcarriers, a part of the w subcarriers may be used to carry an RS, and the other part of the subcarriers is used to carry a signal for suppressing a PAPR. For example, it is assumed that the target subcarrier set and the first subcarrier set have same 30 subcarriers, first 20 subcarriers in the 30 subcarriers are used to carry the RS, and locations of remaining 10 subcarriers are used as reserved subcarriers. To be specific, an RS pattern is punctured for 10 subcarriers, and 20 replacement subcarriers further need to be selected to be added to a TR pattern. For another example, an RS density may be reduced, for example, change from 1/4 to 1/8, to reduce a quantity of conflicting RS subcarriers, that is, have a same effect as puncturing the RS pattern.

The target subcarrier set is determined in the first determining manner, which can improve PAPR suppression performance. For example, the bandwidth used by the first device includes 132 resource blocks (resource blocks, RBs), a reference signal density is 1/3, and the subcarrier sequence numbers start from 1. If the sequence numbers start from 0, sequence numbers of subcarriers in a carrier set or a reference signal set each are subtracted by 1. It is assumed that a set including the sequence numbers of the subcarriers included in the first subcarrier set (namely, the set Y) is {1, 4, 7, 10, ..., 1582}. A set including the sequence numbers of the subcarriers included in the second subcarrier set is {6, 16, 22, 27, 31, 34, 82, 93, 127, 142, 167, 206, 232, 245, 249, 376, 392, 445, 508, 554, 607, 640, 801, 843, 868, 900, 929, 931, 988, 1072, 1080, 1148, 1175, 1198, 1237, 1245, 1250, 1351, 1431, 1475, 1482, 1515, 1518, 1527, 1532, 1537, 1556, 1565}.

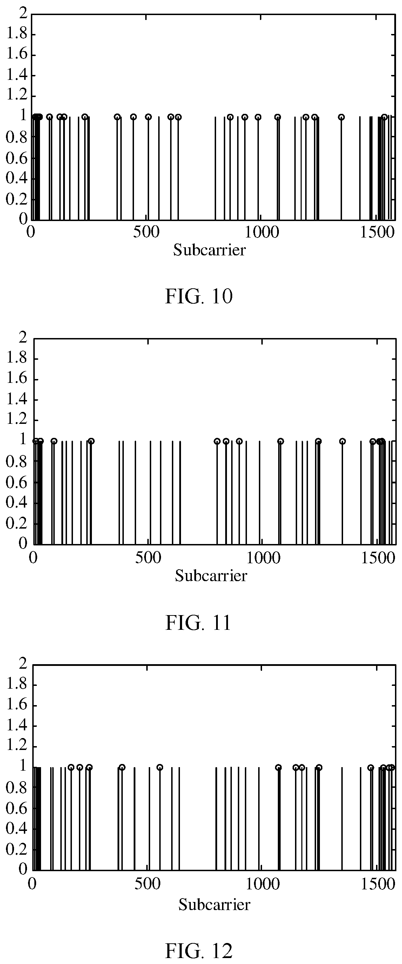

It is assumed that the largest cyclic shift quantity is 3. The first subcarrier set and a subcarrier set obtained without performing a cyclic shift on the second subcarrier set, which may alternatively be considered as a subcarrier set obtained by performing a cyclic shift whose cyclic shift value is 0 (that is, Δk=0) on the second subcarrier set have 21 same subcarriers, as shown in FIG. 10. The first subcarrier set and a subcarrier set obtained by performing a cyclic shift whose cyclic shift value is 1 (that is, Δk=1) on the second subcarrier set have 14 same subcarriers, as shown in FIG. 11. The first subcarrier set and a subcarrier set obtained by performing a cyclic shift whose cyclic shift value is 2 (that is, Δk=2) on the second subcarrier set have 13 same subcarriers, as shown in FIG. 12. Subcarriers marked by circles in FIG. 10 to FIG. 12 are subcarriers that overlap the first subcarrier set. Because Δk=2, and the first subcarrier set and a subcarrier set obtained by performing a cyclic shift on the second subcarrier set have a smallest quantity of overlapping subcarriers, the cyclic shift may be performed on the second subcarrier set according to Δk=2, to obtain the fifth subcarrier set. Sequence numbers of 13 subcarriers included in the fifth subcarrier set and overlapping the first subcarrier set are {169, 208, 247, 394, 556, 931, 1150, 1177, 1252, 1477, 1534, 1558, 1567}.

{169, 208, 247, 394, 556, 931, 1150, 1177, 1252, 1477, 1534, 1558, 1567} are excluded from the fifth subcarrier set, to obtain the third subcarrier set, namely, the set A. A set including sequence numbers of subcarriers in the set A is {8, 18, 24, 29, 33, 36, 84, 95, 129, 144, 234, 251, 378, 447, 510, 609, 642, 803, 845, 870, 902, 933, 990, 1074, 1082, 1200, 1239, 1247, 1353, 1433, 1484, 1517, 1520, 1529, 1539}.

When the subcarriers included in the fifth subcarrier set and overlapping the first subcarrier set are initially replaced, a modulus value of a difference between the sequence numbers of the subcarriers in the set A is calculated, to obtain a set B: {3, 4, 5, 6, 7, 8, 9, 10, 11, 12, 15, 16, 17, 18, 19, 21, 22, 25, 28, 31, 32, 33, 34, 36, 39, 42, 45, 47, 48, 49, 51, 55, 57, 59, 60, 62, 63, 66, 67, 69, 71, 76, 77, 80, 84, 87, 88, 90, 92, 93, 96, 99, 100, 105, 106, 107, 108, 111, 114, 115, 118, 120, 121, 122, 126, 127, 130, 131, 132, 136, 139, 141, 144, 145, 149, 150, 153, 156, 157, 161, 162, 164, 165, 167, 172, 173, 176, 180, 186, 187, 194, 195, 196, 198, 201, 203, 204, 205, 210, 212, 213, 215, 216, 218, 222, 226, 227, 228, 229, 231, 233, 234, 236, 237, 243, 245, 249, 257, 259, 260, 261, 264, 267, 270, 271, 273, 276, 278, 279, 281, 282, 283, 284, 290, 291, 292, 293, 294, 298, 300, 303, 306, 314, 317, 318, 320, 324, 329, 330, 335, 337, 339, 342, 345, 348, 349, 351, 352, 354, 355, 356, 358, 359, 360, 363, 366, 369, 370, 375, 377, 381, 391, 392, 394, 397, 398, 402, 408, 410, 411, 414, 415, 418, 420, 423, 425, 426, 429, 432, 435, 436, 438, 439, 440, 443, 444, 446, 447, 451, 455, 457, 465, 467, 473, 474, 477, 480, 481, 483, 486, 492, 494, 498, 500, 502, 508, 513, 514, 524, 525, 527, 530, 531, 539, 543, 547, 549, 550, 551, 552, 555, 558, 563, 564, 569, 572, 573, 576, 580, 582, 584, 585, 587, 588, 591, 594, 596, 597, 601, 605, 606, 609, 611, 612, 613, 614, 615, 618, 619, 624, 627, 630, 634, 635, 636, 637, 638, 639, 647, 650, 651, 659, 668, 669, 672, 674, 675, 681, 682, 684, 690, 694, 696, 699, 701, 704, 708, 711, 714, 716, 717, 719, 726, 729, 736, 737, 739, 741, 744, 750, 753, 756, 758, 761, 767, 770, 773, 774, 775, 779, 785, 786, 789, 791, 792, 795, 800, 804, 807, 809, 812, 816, 818, 821, 822, 823, 824, 827, 831, 834, 837, 838, 840, 841, 842, 843, 846, 848, 849, 852, 861, 862, 866, 869, 873, 875, 878, 884, 887, 894, 895, 897, 900, 904, 906, 908, 909, 911, 915, 920, 923, 925, 930, 938, 945, 949, 953, 954, 957, 961, 966, 972, 974, 975, 979, 982, 986, 987, 988, 990, 996, 998, 1005, 1007, 1010, 1013, 1019, 1029, 1037, 1038, 1041, 1045, 1046, 1049, 1050, 1053, 1055, 1056, 1058, 1064, 1066, 1070, 1071, 1073, 1074, 1082, 1092, 1095, 1102, 1103, 1105, 1106, 1110, 1116, 1118, 1119, 1139, 1142, 1144, 1151, 1152, 1155, 1161, 1163, 1164, 1167, 1171, 1176, 1182, 1192, 1199, 1203, 1206, 1209, 1210, 1211, 1214, 1215, 1218, 1221, 1223, 1224, 1229, 1231, 1233, 1239, 1250, 1258, 1266, 1269, 1278, 1283, 1286, 1288, 1289, 1295, 1304, 1305, 1317, 1320, 1324, 1329, 1335, 1338, 1340, 1345, 1349, 1355, 1373, 1376, 1385, 1388, 1389, 1391, 1395, 1397, 1400, 1404, 1409, 1410, 1415, 1422, 1425, 1433, 1434, 1436, 1444, 1445, 1448, 1451, 1455, 1460, 1466, 1476, 1481, 1484, 1487, 1488, 1491, 1493, 1496, 1499, 1500, 1502, 1503, 1505, 1506, 1509, 1510, 1511, 1512, 1515, 1521, 1531}.

Subcarriers included in the set A and the set Y are excluded from available subcarriers in the bandwidth used by the first device, and sequence numbers of subcarriers included in a set including remaining subcarriers, namely, the set C, are {2, 3, 5, 6, 9, 11, 12, 14, 15, 17, 20, 21, 23, 26, 27, 30, 32, 35, 38, 39, 41, 42, 44, 45, 47, 48, 50, 51, 53, 54, 56, 57, 59, 60, 62, 63, 65, 66, 68, 69, 71, 72, 74, 75, 77, 78, 80, 81, 83, 86, 87, 89, 90, 92, 93, 96, 98, 99, 101, 102, 104, 105, 107, 108, 110, 111, 113, 114, 116, 117, 119, 120, 122, 123, 125, 126, 128, 131, 132, 134, 135, 137, 138, 140, 141, 143, 146, 147, 149, 150, 152, 153, 155, 156, 158, 159, 161, 162, 164, 165, 167, 168, 170, 171, 173, 174, 176, 177, 179, 180, 182, 183, 185, 186, 188, 189, 191, 192, 194, 195, 197, 198, 200, 201, 203, 204, 206, 207, 209, 210, 212, 213, 215, 216, 218, 219, 221, 222, 224, 225, 227, 228, 230, 231, 233, 236, 237, 239, 240, 242, 243, 245, 246, 248, 249, 252, 254, 255, 257, 258, 260, 261, 263, 264, 266, 267, 269, 270, 272, 273, 275, 276, 278, 279, 281, 282, 284, 285, 287, 288, 290, 291, 293, 294, 296, 297, 299, 300, 302, 303, 305, 306, 308, 309, 311, 312, 314, 315, 317, 318, 320, 321, 323, 324, 326, 327, 329, 330, 332, 333, 335, 336, 338, 339, 341, 342, 344, 345, 347, 348, 350, 351, 353, 354, 356, 357, 359, 360, 362, 363, 365, 366, 368, 369, 371, 372, 374, 375, 377, 380, 381, 383, 384, 386, 387, 389, 390, 392, 393, 395, 396, 398, 399, 401, 402, 404, 405, 407, 408, 410, 411, 413, 414, 416, 417, 419, 420, 422, 423, 425, 426, 428, 429, 431, 432, 434, 435, 437, 438, 440, 441, 443, 444, 446, 449, 450, 452, 453, 455, 456, 458, 459, 461, 462, 464, 465, 467, 468, 470, 471, 473, 474, 476, 477, 479, 480, 482, 483, 485, 486, 488, 489, 491, 492, 494, 495, 497, 498, 500, 501, 503, 504, 506, 507, 509, 512, 513, 515, 516, 518, 519, 521, 522, 524, 525, 527, 528, 530, 531, 533, 534, 536, 537, 539, 540, 542, 543, 545, 546, 548, 549, 551, 552, 554, 555, 557, 558, 560, 561, 563, 564, 566, 567, 569, 570, 572, 573, 575, 576, 578, 579, 581, 582, 584, 585, 587, 588, 590, 591, 593, 594, 596, 597, 599, 600, 602, 603, 605, 606, 608, 611, 612, 614, 615, 617, 618, 620, 621, 623, 624, 626, 627, 629, 630, 632, 633, 635, 636, 638, 639, 641, 644, 645, 647, 648, 650, 651, 653, 654, 656, 657, 659, 660, 662, 663, 665, 666, 668, 669, 671, 672, 674, 675, 677, 678, 680, 681, 683, 684, 686, 687, 689, 690, 692, 693, 695, 696, 698, 699, 701, 702, 704, 705, 707, 708, 710, 711, 713, 714, 716, 717, 719, 720, 722, 723, 725, 726, 728, 729, 731, 732, 734, 735, 737, 738, 740, 741, 743, 744, 746, 747, 749, 750, 752, 753, 755, 756, 758, 759, 761, 762, 764, 765, 767, 768, 770, 771, 773, 774, 776, 777, 779, 780, 782, 783, 785, 786, 788, 789, 791, 792, 794, 795, 797, 798, 800, 801, 804, 806, 807, 809, 810, 812, 813, 815, 816, 818, 819, 821, 822, 824, 825, 827, 828, 830, 831, 833, 834, 836, 837, 839, 840, 842, 843, 846, 848, 849, 851, 852, 854, 855, 857, 858, 860, 861, 863, 864, 866, 867, 869, 872, 873, 875, 876, 878, 879, 881, 882, 884, 885, 887, 888, 890, 891, 893, 894, 896, 897, 899, 900, 903, 905, 906, 908, 909, 911, 912, 914, 915, 917, 918, 920, 921, 923, 924, 926, 927, 929, 930, 932, 935, 936, 938, 939, 941, 942, 944, 945, 947, 948, 950, 951, 953, 954, 956, 957, 959, 960, 962, 963, 965, 966, 968, 969, 971, 972, 974, 975, 977, 978, 980, 981, 983, 984, 986, 987, 989, 992, 993, 995, 996, 998, 999, 1001, 1002, 1004, 1005, 1007, 1008, 1010, 1011, 1013, 1014, 1016, 1017, 1019, 1020, 1022, 1023, 1025, 1026, 1028, 1029, 1031, 1032, 1034, 1035, 1037, 1038, 1040, 1041, 1043, 1044, 1046, 1047, 1049, 1050, 1052, 1053, 1055, 1056, 1058, 1059, 1061, 1062, 1064, 1065, 1067, 1068, 1070, 1071, 1073, 1076, 1077, 1079, 1080, 1083, 1085, 1086, 1088, 1089, 1091, 1092, 1094, 1095, 1097, 1098, 1100, 1101, 1103, 1104, 1106, 1107, 1109, 1110, 1112, 1113, 1115, 1116, 1118, 1119, 1121, 1122, 1124, 1125, 1127, 1128, 1130, 1131, 1133, 1134, 1136, 1137, 1139, 1140, 1142, 1143, 1145, 1146, 1148, 1149, 1151, 1152, 1154, 1155, 1157, 1158, 1160, 1161, 1163, 1164, 1166, 1167, 1169, 1170, 1172, 1173, 1175, 1176, 1178, 1179, 1181, 1182, 1184, 1185, 1187, 1188, 1190, 1191, 1193, 1194, 1196, 1197, 1199, 1202, 1203, 1205, 1206, 1208, 1209, 1211, 1212, 1214, 1215, 1217, 1218, 1220, 1221, 1223, 1224, 1226, 1227, 1229, 1230, 1232, 1233, 1235, 1236, 1238, 1241, 1242, 1244, 1245, 1248, 1250, 1251, 1253, 1254, 1256, 1257, 1259, 1260, 1262, 1263, 1265, 1266, 1268, 1269, 1271, 1272, 1274, 1275, 1277, 1278, 1280, 1281, 1283, 1284, 1286, 1287, 1289, 1290, 1292, 1293, 1295, 1296, 1298, 1299, 1301, 1302, 1304, 1305, 1307, 1308, 1310, 1311, 1313, 1314, 1316, 1317, 1319, 1320, 1322, 1323, 1325, 1326, 1328, 1329, 1331, 1332, 1334, 1335, 1337, 1338, 1340, 1341, 1343, 1344, 1346, 1347, 1349, 1350, 1352, 1355, 1356, 1358, 1359, 1361, 1362, 1364, 1365, 1367, 1368, 1370, 1371, 1373, 1374, 1376, 1377, 1379, 1380, 1382, 1383, 1385, 1386, 1388, 1389, 1391, 1392, 1394, 1395, 1397, 1398, 1400, 1401, 1403, 1404, 1406, 1407, 1409, 1410, 1412, 1413, 1415, 1416, 1418, 1419, 1421, 1422, 1424, 1425, 1427, 1428, 1430, 1431, 1434, 1436, 1437, 1439, 1440, 1442, 1443, 1445, 1446, 1448, 1449, 1451, 1452, 1454, 1455, 1457, 1458, 1460, 1461, 1463, 1464, 1466, 1467, 1469, 1470, 1472, 1473, 1475, 1476, 1478, 1479, 1481, 1482, 1485, 1487, 1488, 1490, 1491, 1493, 1494, 1496, 1497, 1499, 1500, 1502, 1503, 1505, 1506, 1508, 1509, 1511, 1512, 1514, 1515, 1518, 1521, 1523, 1524, 1526, 1527, 1530, 1532, 1533, 1535, 1536, 1538, 1541, 1542, 1544, 1545, 1547, 1548, 1550, 1551, 1553, 1554, 1556, 1557, 1559, 1560, 1562, 1563, 1565, 1566, 1568, 1569, 1571, 1572, 1574, 1575, 1577, 1578, 1580, 1581, 1583, 1584}.

A set D includes a modulus value of a difference between a sequence number of each subcarrier in the set C and a sequence number of each subcarrier in the set A, and the set D excludes the element in the set B to obtain the set E. It can be finally obtained through calculation that quantities of sequence number differences corresponding to the subcarrier 83, the subcarrier 170, and the subcarrier 1329 in the set C are all 30, and are the largest. According to the foregoing descriptions, for example, it is agreed on that a subcarrier with a smallest sequence number is used for replacement. In this case, the first device may select the subcarrier 83 as the first subcarrier to replace one of the 13 subcarriers included in the fifth subcarrier set and overlapping the first subcarrier set. Optionally, the first device may start to perform replacement from a subcarrier with a smaller carrier sequence number in the subcarriers included in the fifth subcarrier set and overlapping the first subcarrier set, start to perform replacement from a largest sequence number, or perform replacement in another preset order. In addition, the subcarrier 83 is added to the set A. In this case, sequence numbers of 36 subcarriers included in an obtained set A are {8, 18, 24, 29, 33, 36, 83, 84, 95, 129, 144, 234, 251, 378, 447, 510, 609, 642, 803, 845, 870, 902, 933, 990, 1074, 1082, 1200, 1239, 1247, 1353, 1433, 1484, 1517, 1520, 1529, 1539}. It may be understood that the set A is an updated set A or an updated third subcarrier set.

The foregoing uses a method in which one subcarrier is selected once to replace the subcarrier included in the fifth subcarrier set and overlapping the first subcarrier set as an example. Optionally, in actual use, it may be agreed on that a plurality of subcarriers are selected once to replace the overlapping subcarriers, for example, two or three subcarriers are selected. For example, if the two subcarriers are selected once for the replacement, the subcarrier 83 and the subcarrier 170 may be selected to replace the subcarriers included in the fifth subcarrier set and overlapping the first subcarrier set, to obtain an updated set A. Sequence numbers of 37 subcarriers included in the updated set A are {8, 18, 24, 29, 33, 36, 83, 84, 95, 129, 144, 170, 234, 251, 378, 447, 510, 609, 642, 803, 845, 870, 902, 933, 990, 1074, 1082, 1200, 1239, 1247, 1353, 1433, 1484, 1517, 1520, 1529, 1539}. For another example, if it is agreed on that the three subcarriers are selected once for the replacement, subcarriers 83, 170, and 1329 may be selected as replacement subcarriers. In examples of the following determining manners, one subcarrier is selected once for replacement, and a manner of selecting a plurality of subcarriers once for replacement is also applicable.

It is assumed that the replacement threshold is predefined or configured as a quantity of subcarriers included in the fifth subcarrier set and overlapping the first subcarrier set, that is, 13. A quantity (that is, 1) of subcarriers that have been replaced by the first device is less than 13. An updated fifth subcarrier set, an updated third subcarrier set (that is, an updated set A), and an updated fourth subcarrier set (that is, an updated set C) are obtained through replacement once. During replacement for the second time, the first device replaces a subcarrier included in the updated fifth subcarrier set and overlapping the first subcarrier set with a subcarrier in the updated fourth subcarrier set. A manner of the replacement for the first time is still used for the replacement for the second time. To be specific, the updated fifth subcarrier set is used to replace the fifth subcarrier set in the foregoing step, the updated third subcarrier set is used to replace the third subcarrier set in the foregoing step, and the updated fourth subcarrier set is used to replace the fourth subcarrier set in the foregoing step. In other words, the subcarrier included in the fifth subcarrier set (the updated fifth subcarrier set) obtained last time and overlapping the first subcarrier set is replaced next time. The rest is deduced by analogy until the quantity of subcarriers that have been replaced by the first device is equal to the replacement threshold, and replacement is stopped. The first device uses a fifth subcarrier set updated for the last time as the target subcarrier set. Optionally, the first device uses an updated set A for the last time as the target subcarrier set.

Similarly, it is assumed that the length threshold is predefined or configured as the quantity of subcarriers included in the second subcarrier set. If the first device determines that a quantity of subcarriers included in a set A obtained through replacement once (or by newly adding a subcarrier) is less than the length threshold, the first device performs replacement for the second time. It should be understood that an updated fifth subcarrier set, an updated third subcarrier set (namely, an updated set A), and an updated fourth subcarrier set (namely, an updated set C) are obtained through replacement once. During replacement for the second time, the first device replaces a subcarrier included in the updated fifth subcarrier set and overlapping the first subcarrier set with a subcarrier in the updated fourth subcarrier set. A manner of the replacement for the first time is still used for the replacement for the second time. To be specific, the updated fifth subcarrier set is used to replace the fifth subcarrier set in the foregoing step, the updated third subcarrier set is used to replace the third subcarrier set in the foregoing step, and the updated fourth subcarrier set is used to replace the fourth subcarrier set in the foregoing step. In other words, the subcarrier included in the fifth subcarrier set obtained last time and overlapping the first subcarrier set is replaced next time. The rest is deduced by analogy until the first device determines that a quantity of subcarriers included in a latest set A is equal to the length threshold, and replacement is stopped. The first device uses a fifth subcarrier set updated for the last time as the target subcarrier set. Optionally, the first device uses an updated set A for the last time as the target subcarrier set.

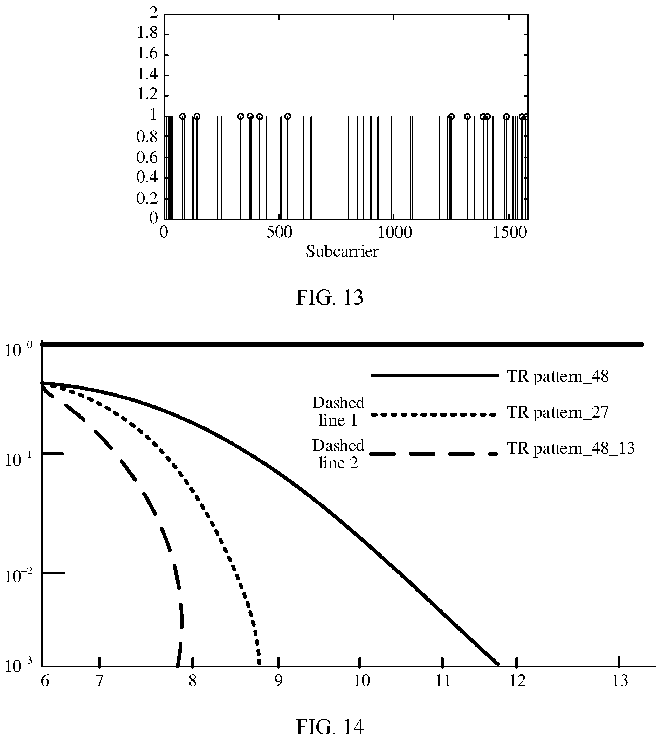

According to the foregoing method, the 13 subcarriers included in the fifth subcarrier set and overlapping the first subcarrier set are finally replaced with 13 subcarriers in the fourth subcarrier set. A set including sequence numbers of the 13 subcarriers in the fourth subcarrier set is {83, 335, 417, 1320, 143, 1406, 1491, 1389, 380, 1259, 1560, 536, 1575}. Subcarriers included in an obtained target subcarrier set are shown in FIG. 13. Subcarriers indicated by circles in FIG. 13 are the 13 subcarriers in the fourth subcarrier set.

As shown in FIG. 14, PAPR suppression performance achieved when the first device performs data transmission by using the first subcarrier set and the target subcarrier set is higher than PAPR suppression performance achieved when the first device performs data transmission by using the first subcarrier set and the second subcarrier set. In FIG. 14, a TR pattern_48 (a solid line in FIG. 14) indicates PAPR suppression performance when a conflict between the second subcarrier set and the first subcarrier set is not considered. A TR pattern_27 (a dashed line 1 in FIG. 14) indicates PAPR suppression performance when a subcarrier obtained by excluding a subcarrier that overlaps the first subcarrier set from the second subcarrier set is used as TR. A TR pattern_48_13 (a dashed line 2 in FIG. 14) indicates PAPR suppression performance when the target subcarrier set determined in the first determining manner and the first subcarrier set are used. It can be learned from FIG. 14 that the target subcarrier set is determined in the first determining manner, and this can reduce a PAPR suppression performance loss caused by a conflict between a TR pattern and an RS pattern, to ensure high PAPR suppression performance as much as possible.

**Second determining manner:** A subcarrier included in the second subcarrier set and overlapping the first subcarrier set is replaced with a subcarrier in a seventh subcarrier set, to obtain a target subcarrier set. It is assumed that the second subcarrier set and the first subcarrier set have M same subcarriers, and M is an integer greater than or equal to 1. Initially, one or more of the M subcarriers in the second subcarrier set may be replaced with the subcarrier in the seventh subcarrier set. An updated second subcarrier set is obtained by replacing the one or more subcarriers in the second subcarrier set. If an updated second subcarrier set obtained through replacement for the first time and the first subcarrier set have M1 same subcarriers, and M1 is an integer greater than 1, a subcarrier included in the updated second subcarrier set and overlapping the first subcarrier set is replaced with a subcarrier in an updated seventh subcarrier set. The rest is deduced by analogy until all the M subcarriers in the original second subcarrier set are replaced, and an obtained updated second subcarrier set is the target subcarrier set.

A difference between the second determining manner and the first determining manner is that a cyclic shift does not need to be performed on the second subcarrier set, and the subcarrier included in the second subcarrier set and overlapping the first subcarrier set is directly replaced with the subcarrier in the seventh subcarrier set, to obtain the target subcarrier set. In other words, the target subcarrier set includes Z subcarriers in a sixth subcarrier set and the seventh subcarrier set, and Z is greater than or equal to 0. The Z subcarriers include a second subcarrier, the second subcarrier corresponds to a largest quantity of sequence number differences, and the sequence number difference belongs to a fourth sequence number difference set. For details about how to replace, with the subcarrier in the seventh subcarrier set, the subcarrier included in the second subcarrier set and overlapping the first subcarrier set, refer to the foregoing descriptions of replacing, with the subcarrier in the fourth subcarrier set, the subcarrier included in the fifth subcarrier set and overlapping the first subcarrier set. Details are not described herein again. In addition, a manner of determining the second subcarrier is the same as a manner of determining the first subcarrier. To be specific, when a plurality of subcarriers in the seventh subcarrier set correspond to a same quantity of sequence number differences, and the quantity of sequence number differences is the largest, it may be agreed on that a specific subcarrier in the plurality of subcarriers is the second subcarrier. For example, a subcarrier corresponding to a largest quantity of sequence number differences in the seventh subcarrier set includes at least two fourth subcarriers, and the second subcarrier belongs to the at least two fourth subcarriers. The second subcarrier may meet any one of the following conditions.

A sequence number of the second subcarrier is a smallest sequence number in sequence numbers of the at least two fourth subcarriers; a sequence number of the second subcarrier is a largest sequence number in sequence numbers of the at least two fourth subcarriers; or the second subcarrier is a y^{th} subcarrier in the at least two fourth subcarriers, where y indicates a subcarrier selection value. The sequence numbers of the at least two fourth subcarriers are sorted in ascending order or descending order. Optionally, the subcarrier selection value y may be agreed on or preset between the network device and the terminal device, or may be sent by the network device to the terminal device.

The foregoing example is still used. A bandwidth used by the first device includes 132 resource blocks (resource blocks, RBs), a reference signal density is 1/3, and subcarrier sequence numbers start from 1. It is assumed that a set including sequence numbers of subcarriers included in the first subcarrier set is {1, 4, 7, 10, ..., 1582}. A set including sequence numbers of subcarriers included in the second subcarrier set is {6, 16, 22, 27, 31, 34, 82, 93, 127, 142, 167, 206, 232, 245, 249, 376, 392, 445, 508, 554, 607, 640, 801, 843, 868, 900, 929, 931, 988, 1072, 1080, 1148, 1175, 1198, 1237, 1245, 1250, 1351, 1431, 1475, 1482, 1515, 1518, 1527, 1532, 1537, 1556, 1565}.

It can be learned that a set including sequence numbers of 21 subcarriers included in the second subcarrier set and overlapping the first subcarrier set is {16, 22, 31, 34, 82, 127, 142, 232, 376, 445, 508, 607, 640, 868, 931, 988, 1072, 1198, 1237, 1351, 1537}. A set including sequence numbers of subcarriers included in the sixth subcarrier set obtained by excluding the 21 subcarriers that overlap the first subcarrier set from the second subcarrier set is {6, 27, 93, 167, 206, 245, 249, 392, 554, 801, 843, 900, 929, 1080, 1148, 1175, 1245, 1250, 1431, 1475, 1482, 1515, 1518, 1527, 1532, 1556, 1565}.

A set including a modulus value of a difference between the sequence numbers of the subcarriers in the sixth subcarrier set (that is, a sixth sequence number difference set) is
{3, 4, 5, 7, 9, 12, 14, 17, 21, 24, 27, 29, 33, 36, 38, 39, 40, 41, 42, 43, 44, 45, 47, 50, 51, 52, 57, 66, 68, 70, 74, 75, 78, 81, 82, 83, 84, 86, 87, 90, 95, 96, 97, 99, 101, 102, 113, 125, 128, 134, 140, 143, 147, 151, 152, 156, 161, 162, 165, 170, 179, 180, 181, 186, 200, 218, 219, 222, 225, 230, 232, 237, 239, 243, 246, 247, 248, 256, 265, 268, 270, 273, 275, 277, 279, 282, 283, 287, 289, 299, 300, 305, 306, 307, 309, 311, 315, 316, 320, 321, 327, 332, 334, 340, 343, 345, 346, 347, 348, 350, 351, 352, 357, 365, 367, 370, 374, 375, 379, 381, 384, 386, 387, 390, 395, 402, 407, 408, 409, 417, 435, 438, 444, 447, 449, 451, 452, 461, 476, 485, 502, 508, 526, 527, 531, 537, 546, 548, 552, 553, 556, 575, 582, 586, 588, 589, 594, 595, 598, 603, 615, 618, 621, 627, 630, 632, 634, 636, 637, 639, 651, 655, 656, 665, 672, 674, 675, 676, 680, 681, 684, 688, 689, 691, 694, 696, 708, 713, 714, 717, 722, 723, 726, 731, 733, 750, 755, 756, 762, 764, 774, 783, 795, 807, 816, 831, 835, 836, 837, 853, 858, 873, 874, 877, 894, 899, 902, 903, 913, 921, 923, 926, 928, 930, 942, 961, 964, 969, 973, 978, 981, 987, 996, 1000, 1001, 1002, 1005, 1008, 1011, 1039, 1044, 1053, 1055, 1074, 1078, 1082, 1083, 1090, 1121, 1123, 1126, 1135, 1140, 1142, 1148, 1152, 1157, 1164, 1169, 1173, 1182, 1186, 1218, 1223, 1225, 1226, 1230, 1233, 1237, 1239, 1244, 1264, 1266, 1269, 1270, 1273, 1276, 1278, 1282, 1283, 1287, 1307, 1308, 1309, 1311, 1312, 1315, 1316, 1320, 1321, 1326, 1338, 1348, 1350, 1351, 1359, 1360, 1365, 1382, 1389, 1398, 1404, 1422, 1425, 1434, 1439, 1448, 1455, 1463, 1469, 1472, 1476, 1488, 1491, 1500, 1505, 1509, 1512, 1521, 1526, 1529, 1538, 1550, 1559}.

A fifth sequence number difference set includes a modulus value of a difference between a sequence number of each subcarrier in the seventh subcarrier set and a sequence number of each subcarrier in the sixth subcarrier set, and an element in the sixth sequence number difference set is excluded from the fifth sequence number difference set to obtain the fourth sequence number difference set. It can be finally obtained through calculation that sequence number differences corresponding to subcarriers 14, 21, 29, 38, 62, 141, 260, 360, 567, 603, 722, 954, 960, and 1382 in the seventh subcarrier set are all 27, and are the largest. According to the foregoing descriptions, for example, it is agreed on that a subcarrier with a smallest sequence number is used for replacement. In this case, the first device may select the subcarrier 14 to replace one of the 21 subcarriers included in the second subcarrier set and overlapping the first subcarrier set. An updated second subcarrier set may be obtained through replacement once. Correspondingly, an updated sixth subcarrier set may be obtained based on the updated second subcarrier, to be specific, the subcarrier 14 is added to the sixth subcarrier set to obtain the updated sixth subcarrier set. The updated sixth subcarrier set includes 28 subcarriers. Correspondingly, an updated seventh subcarrier set may be obtained based on the updated sixth subcarrier set.

It is assumed that a replacement threshold is predefined or configured, for example, the replacement threshold is a quantity of subcarriers included in the second subcarrier set and overlapping the first subcarrier set, that is, 21. A quantity (that is, 1) of subcarriers that have been replaced by the first device is less than 21. An updated second subcarrier set, an updated sixth carrier set, and an updated seventh subcarrier set are obtained through replacement once. During replacement for the second time, the first device replaces a subcarrier included in the updated second subcarrier set and overlapping the first subcarrier set with a subcarrier in the updated seventh subcarrier set. A manner of the replacement for the first time is still used for the replacement for the second time. In addition, during the replacement for the second time, the subcarrier included in the updated second subcarrier and overlapping the first subcarrier set is replaced with a subcarrier in the updated seventh subcarrier set. A manner of determining the subcarrier is the same as the manner of determining the second subcarrier, to be specific, the subcarrier corresponds to a largest quantity of sequence number differences, and the sequence number difference belongs to an updated fourth sequence number difference sequence number. The rest is deduced by analogy until the first device determines that a quantity of subcarriers that have been replaced reaches the replacement threshold, and replacement is stopped. The first device uses a second subcarrier set updated for the last time as the target subcarrier set. Optionally, the first device uses a sixth subcarrier set updated for the last time as the target subcarrier set.

Similarly, it is assumed that a length threshold is predefined or configured as the quantity of subcarriers included in the second subcarrier set. If the first device determines that a quantity of subcarriers included in a sixth subcarrier set obtained through replacement once or by newly adding a subcarrier is less than the length threshold, the first device performs replacement for the second time. It should be understood that an updated sixth subcarrier set and an updated seventh subcarrier set are obtained through replacement once. During replacement for the second time, the first device replaces a subcarrier included in the updated second subcarrier set and overlapping the first subcarrier set with a subcarrier in the updated seventh subcarrier set. A manner of the replacement for the first time is still used for the replacement for the second time. In addition, during the replacement for the second time, the subcarrier included in the updated second subcarrier and overlapping the first subcarrier set is replaced with a subcarrier in the updated seventh subcarrier set. A manner of determining the subcarrier is the same as the manner of determining the second subcarrier, to be specific, the subcarrier corresponds to a largest quantity of sequence number differences, and the sequence number difference belongs to an updated fourth sequence number difference sequence number. The rest is deduced by analogy until the first device determines that a quantity of subcarriers included in a latest sixth subcarrier set is equal to the length threshold, and replacement is stopped. The first device uses a sixth subcarrier set updated for the last time as the target subcarrier set. Optionally, the first device uses a second subcarrier set updated for the last time as the target subcarrier set.

According to the foregoing method, 21 subcarriers are finally determined from the seventh subcarrier set for replacing the 21 subcarriers included in the second subcarrier set and overlapping the first subcarrier set. Sequence numbers of the 21 subcarriers in the seventh subcarrier set are {14,29, 141, 960, 1382, 591, 135, 1049, 1320, 470, 621, 1442, 533, 21, 899, 1274, 1572, 24, 1215, 2, 780}. A set including sequence numbers of subcarriers included in the obtained target subcarrier set is {6, 27, 93, 167, 206, 245, 249, 392, 554, 801, 843, 900, 929, 1080, 1148, 1175, 1245, 1250, 1431, 1475, 1482, 1515, 1518, 1527, 1532, 1556, 1565}.

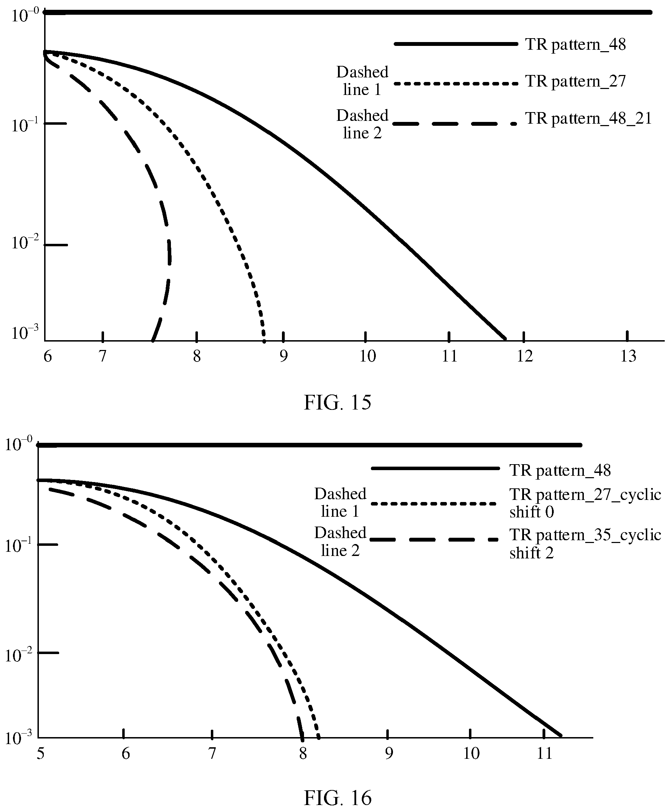

As shown in FIG. 15, PAPR suppression performance achieved when the first device performs data transmission by using the first subcarrier set and the target subcarrier set is higher than PAPR suppression performance achieved when the first device performs data transmission by using the first subcarrier set and the second subcarrier set. In FIG. 15, a TR pattern_48 (a solid line in FIG. 15) indicates PAPR suppression performance when a conflict between the second subcarrier set and the first subcarrier set is not considered. A TR pattern_27 (a dashed line 1 in FIG. 15) indicates PAPR suppression performance when a subcarrier obtained by excluding a subcarrier that overlaps the first subcarrier set from the second subcarrier set is used as TR. A TR pattern_48_21 (a dashed line 2 in FIG. 15) indicates PAPR suppression performance when the target subcarrier set determined in the second determining manner and the first subcarrier set are used. It can be learned from FIG. 15 that the target subcarrier set is determined in the second determining manner, and this can reduce a PAPR suppression performance loss caused by a conflict between a TR pattern and an RS pattern, to ensure high PAPR suppression performance as much as possible.

**Third determining manner:** A plurality of cyclic shifts may be performed on the second subcarrier set, to reduce a quantity of subcarriers that overlaps the first subcarrier set, and the subcarrier that overlaps the first subcarrier set is excluded from a subcarrier set obtained by performing the cyclic shifts, to obtain a target subcarrier set.

A difference between the third determining manner and the first determining manner is that the cyclic shifts are performed on the second subcarrier set, to obtain a fifth subcarrier set. If there is a subcarrier included in the fifth subcarrier set and overlapping the first subcarrier set, the overlapping subcarrier is not replaced with a subcarrier in a fourth subcarrier set, and the overlapping subcarrier is not used as a TR subcarrier.

The foregoing example is still used. A bandwidth used by the first device includes 132 resource blocks (resource blocks, RBs), a reference signal density is 1/3, and subcarrier sequence numbers start from 1. It is assumed that a set including sequence numbers of subcarriers included in the first subcarrier set is {1, 4, 7, 10, ..., 1582}. A set including sequence numbers of subcarriers included in the second subcarrier set is {6, 16, 22, 27, 31, 34, 82, 93, 127, 142, 167, 206, 232, 245, 249, 376, 392, 445, 508, 554, 607, 640, 801, 843, 868, 900, 929, 931, 988, 1072, 1080, 1148, 1175, 1198, 1237, 1245, 1250, 1351, 1431, 1475, 1482, 1515, 1518, 1527, 1532, 1537, 1556, 1565}.

It can be learned that a set including sequence numbers of 21 subcarriers included in the second subcarrier set and overlapping the first subcarrier set is {16, 22, 31, 34, 82, 127, 142, 232, 376, 445, 508, 607, 640, 868, 931, 988, 1072, 1198, 1237, 1351, 1537}. It can be learned from the related content of the foregoing first determining manner that the cyclic shifts are performed on the second subcarrier set according to a cyclic shift value Δk=2, to obtain the fifth subcarrier set including a smallest quantity of subcarriers that overlap the first subcarrier set, and sequence numbers of the 13 overlapping subcarriers are {169, 208, 247, 394, 556, 931, 1150, 1177, 1252, 1477, 1534, 1558, 1567}. The subcarriers that overlap the first subcarrier set are excluded from the fifth subcarrier set, to obtain the target subcarrier set. Sequence numbers of 35 subcarriers in the target subcarrier set are {8, 18, 24, 29, 33, 36, 84, 95, 129, 144, 234, 251, 378, 447, 510, 609, 642, 803, 845, 870, 902, 933, 990, 1074, 1082, 1200, 1239, 1247, 1353, 1433, 1484, 1517, 1520, 1529, 1539}.

Optionally, the network device sends a cyclic shift value, for example, a value ΔK, to the terminal device. The network device and/or the terminal perform/performs a cyclic shift on an original TR pattern based on the cyclic shift value to obtain a target TR pattern. Alternatively, the network device or the terminal performs a cyclic shift on an original TR pattern based on the cyclic shift value to obtain a shifted TR pattern, and a remaining subcarrier obtained by excluding a subcarrier that overlaps an RS pattern from the shifted TR pattern forms a target TR pattern. The network device or the terminal carries, on the subcarrier included in the target TR pattern, a signal for suppressing a PAPR, to perform data transmission.

As shown in FIG. 16, PAPR suppression performance achieved when the first device performs data transmission by using the first subcarrier set and the target subcarrier set is higher than PAPR suppression performance achieved when the first device performs data transmission by using the first subcarrier set and the second subcarrier set. In FIG. 16, a TR pattern_27_cyclic shift 0 (a dashed line 1 in FIG. 16) indicates PAPR suppression performance when a subcarrier obtained by excluding a subcarrier that overlaps the first subcarrier set from the second subcarrier set is used as TR. A TR pattern _3 5_cyclic shift 2 (a dashed line 2 in FIG. 16) indicates PAPR suppression performance when the target subcarrier set determined in the third determining manner and the first subcarrier set are used. A solid line in FIG. 16 shows that a PAPR is not suppressed by using TR. It can be learned from FIG. 16 that the target subcarrier set is determined in the third determining manner, and this alleviates a problem of a PAPR suppression performance loss caused by a conflict between a TR pattern and an RS pattern.

**Fourth determining manner:** A mapping relationship among the first subcarrier set, the second subcarrier set, and the target subcarrier set is agreed on, and the target subcarrier set is determined based on the mapping relationship. In other words, a mapping relationship among an original TR pattern, an RS pattern, and a target TR pattern is agreed on, and the target TR pattern is determined based on the mapping relationship. The first device may determine the target TR pattern based on the original TR pattern, the RS pattern, and the mapping relationship. This can reduce complexity of determining the target subcarrier set by the first device.

For example, Table 1 shows a mapping relationship among the original TR pattern, the RS pattern, and the target TR pattern.

**Table 1**

| Original TR pattern | RS pattern | Target TR pattern |
|---|---|---|
| TR pattern 1 | RS pattern 1 | TR pattern 2 |
| TR pattern 3 | RS pattern 2 | TR pattern 4 |
| TR pattern 5 | RS pattern 3 | TR pattern 6 |
| ... | ... | ... |

The TR pattern 1 to the TR pattern 6, and the RS pattern 1 to the RS pattern 3 may be predefined. The target TR pattern and the RS pattern have no overlapping subcarrier, or a quantity of subcarriers included in the target TR pattern and overlapping the RS pattern is less than a quantity of subcarriers included in the original TR pattern and overlapping the RS pattern.

Optionally, the network device sends a correspondence between at least one original TR pattern, at least one RS pattern, and at least one target TR pattern to the terminal device.

Optionally, the network device sends the RS pattern and/or the original TR pattern to the terminal device, and the network device or the terminal device determines the target TR pattern based on the RS pattern and the RS pattern and/or the original TR pattern that are/is sent by the network device. For example, the network device and the terminal device determine the target TR pattern based on the RS pattern, the original TR pattern, and a predefined mapping relationship. Alternatively, the network device and the terminal device obtain the target TR pattern based on the RS pattern and the TR pattern and in an agreed-on determining manner (for example, the foregoing first, second, or third determining manner), or pre-determine and prestore the target TR pattern in an agreed-on determining manner.

For example, the original TR pattern may be the first subcarrier set {1, 2, 4, 6, 8} in the first determining manner, the RS pattern may be the second subcarrier set {1, 4, 7, 10} in the first determining manner, and the target TR pattern may be the target subcarrier set {2, 3, 5, 9, 11} in the first determining manner.

Alternatively, the original TR pattern may be the second subcarrier set {6, 16, 22, 27, 31, 34, 82, 93, 127, 142, 167, 206, 232, 245, 249, 376, 392, 445, 508, 554, 607, 640, 801, 843, 868, 900, 929, 931, 988, 1072, 1080, 1148, 1175, 1198, 1237, 1245, 1250, 1351, 1431, 1475, 1482, 1515, 1518, 1527, 1532, 1537, 1556, 1565} in the first determining manner, the RS pattern may be the first subcarrier set {1, 4, 7, 10, ..., 1582} in the first determining manner, and the target TR pattern may be the target subcarrier set {8, 18, 24, 29, 33, 36, 83, 84, 95, 129, 143, 144, 234, 251, 335, 378, 380, 417, 447, 510, 536, 609, 642, 803, 845, 870, 902, 933, 990, 1074, 1082, 1200, 1239, 1247, 1259, 1320, 1353, 1389, 1406, 1433, 1484, 1491, 1517, 1520, 1529, 1539, 1560, 1575} in the first determining manner.

For another example, the original TR pattern may be the second subcarrier set {6, 16, 22, 27, 31, 34, 82, 93, 127, 142, 167, 206, 232, 245, 249, 376, 392, 445, 508, 554, 607, 640, 801, 843, 868, 900, 929, 931, 988, 1072, 1080, 1148, 1175, 1198, 1237, 1245, 1250, 1351, 1431, 1475, 1482, 1515, 1518, 1527, 1532, 1537, 1556, 1565} in the second determining manner, the RS pattern may be the first subcarrier set {1, 4, 7, 10, ..., 1582} in the second determining manner, and the target TR pattern may be the target subcarrier set {2, 6, 14, 21, 24, 27, 29, 93, 135, 141, 167, 206, 245, 249, 392, 470, 533, 554, 591, 621, 780, 801, 843, 899, 900, 929, 960, 1049, 1080, 1148, 1175, 1215, 1245, 1250, 1274, 1320, 1382, 1431, 1442, 1475, 1482, 1515, 1518, 1527, 1532, 1556, 1565, 1572} in the second determining manner.

For another example, the original TR pattern may be the second subcarrier set {6, 16, 22, 27, 31, 34, 82, 93, 127, 142, 167, 206, 232, 245, 249, 376, 392, 445, 508, 554, 607, 640, 801, 843, 868, 900, 929, 931, 988, 1072, 1080, 1148, 1175, 1198, 1237, 1245, 1250, 1351, 1431, 1475, 1482, 1515, 1518, 1527, 1532, 1537, 1556, 1565} in the third determining manner, the RS pattern may be the first subcarrier set {1, 4, 7, 10, ..., 1582} in the third determining manner, and the target TR pattern may be the target subcarrier set {8, 18, 24, 29, 33, 36, 84, 95, 129, 144, 234, 251, 378, 447, 510, 609, 642, 803, 845, 870, 902, 933, 990, 1074, 1082, 1200, 1239, 1247, 1353, 1433, 1484, 1517, 1520, 1529, 1539} in the third determining manner.

In an alternative solution, a mapping relationship between the first subcarrier set and the target subcarrier set is agreed on, and the target subcarrier set is determined based on the mapping relationship. In other words, a mapping relationship between the RS pattern and the target TR pattern is agreed on, and the target TR pattern is determined based on the mapping relationship. The first device may determine the target TR pattern based on the RS pattern and the mapping relationship.

For example, Table 2 shows a mapping relationship between the RS pattern and the target TR pattern.

**Table 2**

| RS pattern | Target TR pattern |
|---|---|
| RS pattern 1 | TR pattern 1 |
| RS pattern 2 | TR pattern 2 |
| RS pattern 3 | TR pattern 3 |
| ... | ... |

The TR pattern 1 to the TR pattern 3, and the RS pattern 1 to the RS pattern 3 may be predefined. The target TR pattern and the RS pattern have no overlapping subcarrier, or the target TR pattern and the RS pattern have a small quantity of overlapping subcarriers. The TR pattern 1 to the TR pattern 3 may be determined in any one or more of the foregoing first determining manner to the third determining manner.

For example, the RS pattern may be the first subcarrier set {1, 4, 7, 10, ..., 1582} in the first determining manner, and correspondingly, the target TR pattern may be the target subcarrier set {2, 3, 5, 9, 11} or {8, 18, 24, 29, 33, 36, 83, 84, 95, 129, 143, 144, 234, 251, 335, 378, 380, 417, 447, 510, 536, 609, 642, 803, 845, 870, 902, 933, 990, 1074, 1082, 1200, 1239, 1247, 1259, 1320, 1353, 1389, 1406, 1433, 1484, 1491, 1517, 1520, 1529, 1539, 1560, 1575} in the first determining manner.

For another example, the RS pattern may be the first subcarrier set {1, 4, 7, 10, ..., 1582} in the second determining manner, and the target TR pattern may be the target subcarrier set {2, 6, 14, 21, 24, 27, 29, 93, 135, 141, 167, 206, 245, 249, 392, 470, 533, 554, 591, 621, 780, 801, 843, 899, 900, 929, 960, 1049, 1080, 1148, 1175, 1215, 1245, 1250, 1274, 1320, 1382, 1431, 1442, 1475, 1482, 1515, 1518, 1527, 1532, 1556, 1565, 1572} in the second determining manner.

For another example, the RS pattern may be the first subcarrier set {1, 4, 7, 10, ..., 1582} in the first determining manner, and the target TR pattern may be the target subcarrier set {8, 18, 24, 29, 33, 36, 84, 95, 129, 144, 234, 251, 378, 447, 510, 609, 642, 803, 845, 870, 902, 933, 990, 1074, 1082, 1200, 1239, 1247, 1353, 1433, 1484, 1517, 1520, 1529, 1539} in the third determining manner.

For another example, index numbers start from 0. When the RS pattern is {0:4:end}, the target TR pattern may be {30, 1558, 118, 1543, 1490, 1066, 59, 5, 131, 1333, 1581, 37, 1281, 9, 498, 758, 449, 1238, 587, 635, 1359, 1199, 313, 579, 1166, 47, 238, 1175, 1406, 91, 838, 1034, 25, 641, 1535, 199, 1103, 1302, 925, 873, 1330, 249, 403, 978, 1170, 482, 363, 682, 1201, 1401, 71, 750, 1507, 489, 334, 411, 1463, 1085, 571, 1557, 15, 645, 159, 422, 39, 210, 1418, 283, 823, 1030, 270, 559, 1493, 1439, 421, 1035, 293, 1501, 1562, 1245, 1559, 674, 234, 1301, 1537, 21, 965, 185}.

When the RS pattern is {1:4:end}, the target TR pattern may be {31, 1559, 119, 1544, 1491, 1067, 60, 6, 132, 1334, 1582, 38, 1282, 10, 499, 759, 450, 1239, 588, 636, 1360, 1200, 314, 580, 1167, 48, 239, 1176, 1407, 92, 839, 1035, 26, 642, 1536, 200, 1104, 1303, 926, 874, 1331, 250, 404, 979, 1171, 483, 364, 683, 1202, 1402, 72, 751, 1508, 490, 335, 412, 1464, 1086, 572, 1558, 16, 646, 160, 423, 40, 211, 1419, 284, 824, 1031, 271, 560, 1494, 1440, 422, 1036, 294, 1502, 1563, 1246, 1560, 675, 235, 1302, 1538, 22, 966, 186}.

When the RS pattern is {0:24: end}, the target TR pattern may be {291, 424, 1086, 1257, 339, 1537, 1396, 176, 889, 173, 746, 1430, 1246, 508, 701, 828, 174, 646, 1206, 1549, 158, 1573, 1443, 392, 940, 114, 494, 47, 638, 920, 581, 180, 800, 63, 894, 1310, 243, 1388, 30, 395, 717, 1131, 7, 268, 946, 327, 1211, 237, 1168, 371, 853, 1534, 6, 208, 752, 273, 1247, 855, 684, 526, 1083, 1581, 121, 472, 1237, 322, 1524, 1020, 155, 695, 898, 1505, 509, 1135, 1256, 253, 1318, 857, 1393, 1236, 1180, 1290, 1109, 124, 770, 688, 55, 1431}.

When the RS pattern is divided into four parts: {0:2:end}, {1:2:end}, {0:2:end}, and {1:2:end}, the target TR pattern may be {1183, 351, 395, 1554, 412, 1490, 3, 113, 1564, 159, 377, 1045, 528, 311, 1133, 1566, 803, 917, 710, 207, 799, 1484, 819, 574, 35, 57, 588, 1262, 293, 221, 1558, 1015, 1530, 121, 939, 1258, 654, 923, 1358, 1572, 730, 1, 782, 1228, 967, 1388, 71, 1057, 482, 5, 951, 195, 973, 682, 1370, 490, 1516, 1282, 436, 1450, 1185, 1063, 1065, 373, 61, 768, 398, 1306, 45, 909, 786, 1458, 622, 1033, 215, 1570, 564, 1296, 1073, 329, 1486, 885, 1510, 1580, 440, 462, 536, 935} or {82, 1065, 504, 1294, 1560, 1562, 336, 1509, 262, 112, 122, 155, 1568, 1184, 57, 1546, 784, 25, 596, 1467, 1223, 1385, 1270, 1339, 5, 920, 992, 61, 145, 862, 1052, 1528, 890, 1191, 392, 179, 1083, 13, 756, 157, 906, 1312, 1174, 689, 169, 1532, 531, 581, 340, 925, 585, 70, 644, 1408, 687, 419, 634, 1383, 1207, 1473, 293, 1485, 827, 374, 35, 1379, 931, 539, 171, 1189, 464, 559, 961, 1152, 677, 845, 853, 636, 492, 1298, 273, 1424, 502, 1548, 315, 715, 1465, 858}.

When the RS pattern may be {0:24: end}, the target TR pattern may be {472, 1519, 1537, 1387, 119, 429, 1550, 215, 81, 1163, 1017, 1452, 492, 1174, 562, 93, 1552, 389, 314, 955, 1135, 1034, 161, 390, 303, 1044, 608, 269, 939, 1493, 930, 237, 1155, 561, 1523, 669, 1487, 1236, 618, 33, 1568, 1329, 1380, 1385, 20, 279, 513, 948, 1, 10, 1580, 1421, 147, 607, 1084, 352, 544, 1384, 1409, 947, 114, 345, 54, 1247, 532, 1232, 152, 478, 968, 614, 1322, 949, 1444, 978, 1209, 292, 1578, 242, 228, 111, 1563, 1498, 1179, 476, 1359, 1205, 448, 940}.

It should be noted that Table 1 and Table 2 are merely examples, and the target TR pattern may be determined based on an RS density, a bandwidth, and/or the like.

S602: The first device performs data transmission based on the first subcarrier set and the target subcarrier set.

After determining the target subcarrier set, the first device may perform data transmission by using the target subcarrier set. For example, the first device may send information to the second device by using the target subcarrier set and the first subcarrier set. For example, the first device may use a subcarrier included in the target subcarrier set to carry the signal for suppressing the PAPR, use the first subcarrier set to carry the RS signal, and use a part of carriers other than a reserved tone and an RS carrier to carry a data signal. Certainly, to improve spectral efficiency, the data signal may alternatively be carried on the subcarrier included in the target subcarrier set. Alternatively, when demodulating the information received from the second device, the first device may skip or exclude, during the demodulation, the reserved tones for PAPR suppression, that is, skip decoding signals on the reserved tones for PAPR suppression.

It may be understood that when the second device communicates with the first device, the second device also needs to determine the target subcarrier set. A manner in which the second device determines the target subcarrier set may be the same as the manner in which the first device determines the target subcarrier set. In other words, the second device may also determine the target subcarrier set in one or more of the first determining manner to the fourth determining manner as described above. However, the first device and the second device need to agree on or indicates, by using signaling, a specific determining manner in the first determining manner to the fourth determining manner described above, for determining the target subcarrier set, to ensure that target subcarrier sets determined by the first device and the second device are the same.

In a possible implementation, after determining the target subcarrier set, the first device may send the determined target subcarrier set to the second device. Alternatively, after determining the target subcarrier set, the second device may send the determined target subcarrier set to the first device.

The first device may further report a PAPR suppression performance requirement to the second device, so that the second device can determine, based on the PAPR suppression performance requirement of the first device, a quantity of subcarriers included in the target subcarrier set, to meet the PAPR suppression performance requirement of the first device as much as possible. Optionally, the second device is the network device, and the second device sends, to the first device, the quantity of subcarriers included in the target subcarrier set. Alternatively, the second device sends, to the first device, a quantity of subcarriers to be added to the third subcarrier set. Alternatively, the second device sends, to the first device, a quantity of subcarriers to be added to the sixth subcarrier set. It should be noted that when a specific PAPR suppression performance loss is allowed, the target subcarrier set may include a smaller quantity of subcarriers. In other words, the first device and the second device may use a part of the subcarriers in the target subcarrier set to carry the signal for suppressing the PAPR, and use the other part of the subcarriers to carry the data signal.

In embodiments of this application, solution steps in one or more of the foregoing four determining manners may be mutually combined, to obtain a different solution. Signaling in the solutions and embodiments of this application, for example, the largest cyclic shift quantity or the largest cyclic shift value, the cyclic shift set selection value x, the replacement reserved tone value X_replace, the subcarrier selection value y, the value of the quantity of subcarriers that are replaceable once X_once, the replacement threshold, the length threshold, the subcarrier selection quantity value y, the cyclic shift value, the mapping relationship among the original TR pattern, the RS pattern, and the target TR pattern, and the quantity of subcarriers included in the target subcarrier set is sent by the network device to the terminal in a broadcast or multicast manner in at least one piece of broadcast information including a system information block (system information block, SIB) 1, other system information (other system information, OSI), a master system information block (master information block, MIB), and the like. The signaling is sent to the UE in the broadcast or multicast manner. This can avoid scheduling different resources for different terminal devices for sending the signaling, to reduce signaling overheads of scheduling the resources and reduce system scheduling complexity.

In addition, if the signaling is sent in a radio resource control (radio resource control, RRC) connection setup phase and a subsequent communication process, the network device may include the foregoing signaling in at least one piece of information of RRC signaling (for example, RRC setup (RRC setup) message, RRC reconfiguration (RRC Reconfiguration) signaling, or RRC resume (RRC Resume) signaling), downlink control information (downlink control information, DCI), group DCI, and a media access control (media access control, MAC)-control element (control element, CE) or indicate the foregoing signaling/parameter values to the terminal device in a table manner, or send the signaling to the terminal device during data transmission or in a separately allocated PDSCH bearer in the unicast or multicast manner. An advantage of sending the foregoing signaling to the terminal device separately or in a group is that a parameter value of each terminal device/each group of terminal devices can be flexibly controlled, and different parameter values are configured for the terminal device based on different link budgets of different locations, different areas, or the like of the terminal device, to optimize system transmit power efficiency and optimize terminal device communication performance/system communication performance. For example, different target TR patterns may be configured and used (for example, different quantities of subcarriers are configured in the TR patterns) based on different geographical locations of the terminal device, different required link budgets, and different signal transmit power or power efficiency requirements, to optimize PAPR suppression performance and spectral efficiency of each terminal device/each group of terminal devices, avoid an excessive waste of spectrum resources, and improve overall communication performance of the terminal device and a system.

In this embodiment of this application, when a plurality of reserved subcarriers for suppressing the PAPR overlap a subcarrier for carrying a reference signal, the overlapping subcarrier may be replaced with another subcarrier. The another subcarrier is a subcarrier other than the plurality of reserved subcarriers for suppressing the PAPR and other than the subcarrier for carrying the reference signal. The overlapping subcarrier is replaced with the another subcarrier, so that the reserved subcarriers as many as possible are used to suppress the PAPR, thereby reducing or avoiding a PAPR suppression performance loss.

In embodiments provided in this application, the method provided in embodiments of this application is described separately from perspectives of the first device, the second device, and interaction between the first device and the second device. To implement functions in the method provided in the foregoing embodiments of this application, the first device and the second device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

The following describes communication apparatuses for implementing the foregoing method in embodiments of this application with reference to the accompanying drawings.

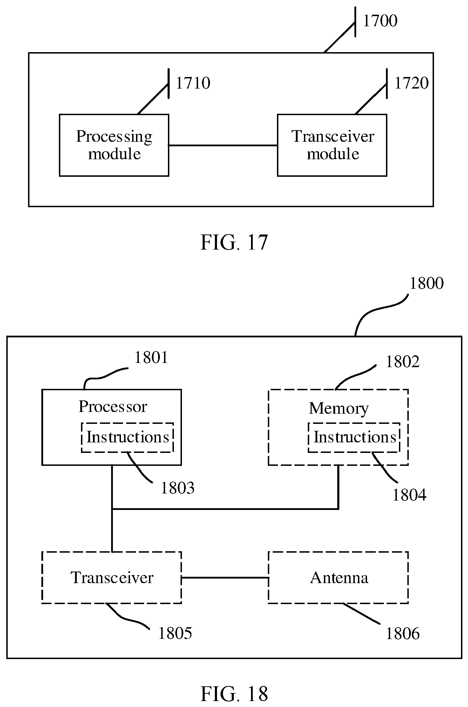

FIG. 17 is a block diagram of a communication apparatus 1700 according to an embodiment of this application. The communication apparatus 1700 may include a processing module 1710 and a transceiver module 1720. Optionally, a storage unit may be further included. The storage unit may be configured to store instructions (code or a program) and/or data. The processing module 1710 and the transceiver module 1720 may be coupled to the storage unit. For example, the processing module 1710 may read the instructions (the code or the program) and/or the data in the storage unit, to implement a corresponding method. The foregoing modules may be disposed independently, or may be partially or completely integrated.

In some possible implementations, the communication apparatus 1700 can correspondingly implement behavior and a function of the first device or the second device in the foregoing method embodiment. The communication apparatus 1700 may be a first device or a second device, may be a component (for example, a chip or a circuit) used in the first device or the second device, or may be a chip or a chipset in the first device or the second device, or a part of the chip configured to perform a related method function.

For example, the processing module 1710 may be configured to determine a target subcarrier set based on a first subcarrier set and a second subcarrier set. The transceiver module 1720 may be configured to perform data transmission based on the first subcarrier set and the target subcarrier set. The first subcarrier set and the second subcarrier set have M same subcarriers. A subcarrier in the first subcarrier set is used to carry a reference signal, and a subcarrier in the second subcarrier set is used to carry a signal for suppressing a PAPR. The target subcarrier set and the first subcarrier set have Y same subcarriers, and Y is greater than or equal to 0 and less than M.

In an optional implementation, the processing module 1710 is specifically configured to determine the target subcarrier set based on the first subcarrier set, the second subcarrier set, and a mapping relationship. The mapping relationship is correspondences between a plurality of first subcarrier sets, a plurality of second subcarrier sets, and a plurality of target subcarrier sets.

In an optional implementation, the target subcarrier set includes X subcarriers in a third subcarrier set and a fourth subcarrier set. The fourth subcarrier set is a set including a subcarrier in all subcarriers in a bandwidth of the communication apparatus 1700 other than a subcarrier included in the third subcarrier set and the first subcarrier set. The third subcarrier set is a subcarrier set obtained by excluding the X subcarriers from a fifth subcarrier set. The fifth subcarrier set is obtained by performing K cyclic shifts on the second subcarrier set, K is greater than or equal to 1 and is less than or equal to a largest cyclic shift quantity. X is a quantity of subcarriers included in an intersection set of the fifth subcarrier set and the first subcarrier set, and X is less than or equal to M.

In an optional implementation, the X subcarriers include a first subcarrier, the first subcarrier corresponds to a largest quantity of sequence number differences, and the sequence number difference belongs to a first sequence number difference set. The first sequence number difference set is obtained by excluding a sequence number difference in a third sequence number difference set from a second sequence number difference set. The second sequence number difference set includes a difference between a sequence number of each subcarrier in the fourth subcarrier set and a sequence number of each subcarrier in the third subcarrier set. The third sequence number difference set includes a difference between sequence numbers of subcarriers in the third subcarrier set.

In an optional implementation, the target subcarrier set includes Z subcarriers in a sixth subcarrier set and a seventh subcarrier set. The sixth subcarrier set is a set including a remaining subcarrier obtained by excluding the M subcarriers that overlap the first subcarrier set from the second subcarrier set. The seventh subcarrier set is a set including a subcarrier in all subcarriers in a bandwidth of the communication apparatus 1700 other than a subcarrier included in the sixth subcarrier set and the first subcarrier set, and Z is less than or equal to M.

In an optional implementation, the Z subcarriers include a second subcarrier, the second subcarrier corresponds to a largest quantity of sequence number differences, and the sequence number difference belongs to a fourth sequence number difference set. The fourth sequence number difference set is obtained by excluding a sequence number difference in a sixth sequence number difference set from a fifth sequence number difference set. The fifth sequence number difference set includes a difference between a sequence number of each subcarrier in the fourth subcarrier set and a sequence number of each subcarrier in the sixth subcarrier set. The sixth sequence number difference set includes a difference between sequence numbers of subcarriers in the sixth subcarrier set.

In an optional implementation, the first subcarrier belongs to at least two third subcarriers in the fourth subcarrier set, and quantities of sequence number differences corresponding to the at least two third subcarriers are the same, and a sequence number of the first subcarrier is a smallest sequence number in sequence numbers of the at least two third subcarriers; a sequence number of the first subcarrier is a largest sequence number in sequence numbers of the at least two third subcarriers; or the first subcarrier is a y^{th} subcarrier in the at least two third subcarriers, and sequence numbers of the at least two third subcarriers are sorted in ascending order or descending order.

In an optional implementation, the target subcarrier set is a set including a remaining subcarrier obtained by excluding X subcarriers that overlap with the first subcarrier set from the fifth subcarrier set. The fifth subcarrier set is a subcarrier set obtained by performing K cyclic shifts on the second subcarrier set, K is greater than or equal to 1 and is less than or equal to a largest cyclic shift quantity.

In an optional implementation, the transceiver module 1720 is further configured to:
receive information about the first subcarrier set and/or information about the second subcarrier set that are/is sent by a network device.

In an optional implementation, the transceiver module 1720 is further configured to:
send information about the first subcarrier set and/or information about the second subcarrier set to a terminal device.

It should be understood that the processing module 1710 in this embodiment of this application may be implemented by a processor or a processor-related circuit component, and the transceiver module 1720 may be implemented by a transceiver, a transceiver-related circuit component, or a communication interface.

FIG. 18 is a block diagram of a communication apparatus 1800 according to an embodiment of this application. The communication apparatus 1800 may be a first device, and can implement a function of the first device in the method provided in embodiments of this application. Alternatively, the communication apparatus 1800 may be an apparatus that can support a first device in implementing a corresponding function in the method provided in embodiments of this application, and the communication apparatus 1800 may be a chip system. In this embodiment of this application, the chip system may include a chip, or may include a chip and another discrete component. For a specific function, refer to the descriptions in the foregoing method embodiment. Alternatively, the communication apparatus 1800 may be a second device, and can implement a function of the second device in the method provided in embodiments of this application. Alternatively, the communication apparatus 1800 may be an apparatus that can support a second device in implementing a corresponding function in the method provided in embodiments of this application, and the communication apparatus 1800 may be a chip system. In this embodiment of this application, the chip system may include a chip, or may include a chip and another discrete component. For a specific function, refer to the descriptions in the foregoing method embodiment.

The communication apparatus 1800 includes one or more processors 1801 that may be configured to implement or support the communication apparatus 1800 in implementing the function of the first device in the method provided in embodiments of this application. For details, refer to the detailed descriptions in the method examples. Details are not described herein. The one or more processors 1801 may alternatively be configured to implement or support the communication apparatus 1800 in implementing the function of the second device in the method provided in embodiments of this application. For details, refer to the detailed descriptions in the method examples. Details are not described herein. The processor 1801 may also be referred to as a processing unit or a processing module, and may implement a specific control function. The processor 1801 may be a general-purpose processor, a dedicated processor, or the like. For example, the processor includes a central processing unit, an application processor, a modem processor, a graphics processor, an image signal processor, a digital signal processor, a video codec processor, a controller, a memory, a neural network processor, and/or the like. The central processing unit may be configured to: control the communication apparatus 1800, execute a software program, and/or process data. Different processors may be independent devices, or may be integrated into one or more processors, for example, integrated into one or more application-specific integrated circuits.

Optionally, the communication apparatus 1800 includes one or more memories 1802, to store instructions 1804. The instructions may be run on the processor 1801, so that the communication apparatus 1800 performs the method described in the foregoing method embodiment. The memory 1802 and the processor 1801 may be separately disposed, or may be integrated together, or it may be considered that the memory 1802 is coupled to the processor 1801. The couplings in embodiments of this application may be indirect couplings or communication connections between the apparatuses, units, or modules in an electrical form, a mechanical form, or another form, and is used for information exchange between the apparatuses, the units, or the modules. The processor 1801 may collaboratively operate with the memory 1802. At least one of the at least one memory may be included in the processor. It should be noted that the memory 1802 is not necessary, and therefore, is illustrated by using a dashed line in FIG. 18.

Optionally, the memory 1802 may further store data. The processor and the memory may be separately disposed, or may be integrated together. In this embodiment of this application, the memory 1802 may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of an instruction or a data structure and that can be accessed by a computer, but is not limited thereto. The memory in this embodiment of this application may alternatively be a circuit or any other apparatus that can implement a storage function, and is configured to store program instructions and/or the data.

Optionally, the communication apparatus 1800 may include instructions 1803 (which may also be referred to as code or a program sometimes). The instructions 1803 may be run on the processor, so that the communication apparatus 1800 performs the method described in the foregoing embodiment. The processor 1801 may store data.

Optionally, the communication apparatus 1800 may further include a transceiver 1805 and an antenna 1806. The transceiver 1805 may be referred to as a transceiver unit, a transceiver module, a transceiver machine, a transceiver circuit, a transceiver, an input/output interface, or the like, and is configured to implement a transceiver function of the communication apparatus 1800 by using the antenna 1806.

The processor 1801 and the transceiver 1805 described in this application may be implemented on an integrated circuit (integrated circuit, IC), an analog IC, a radio frequency integrated circuit (radio frequency identification, RFID), a mixed signal IC, an ASIC, a printed circuit board (printed circuit board, PCB), an electronic device, or the like. The communication apparatus described in this specification may be implemented by an independent device (for example, an independent integrated circuit or a mobile phone), or may be a part of a large device (for example, a module that may be embedded in another device). For details, refer to the foregoing descriptions about the terminal device and the network device. Details are not described herein again.

Optionally, the communication apparatus 1800 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that in some embodiments, the communication apparatus 1800 may include more or fewer components, some components are integrated, or some components are split. These components may be implemented by hardware, software, or a combination of software and hardware.

It should be noted that the communication apparatus in the foregoing embodiment may be the first device (or the second device), may be a circuit, may be a chip used in the first device (or the second device), or may be another combined device, component, or the like that has a function of the first device (or the second device). When the communication apparatus is the first device (or the second device), the transceiver module may be the transceiver, and may include an antenna, a radio frequency circuit, and the like. The processing module may be a processor, for example, a central processing module (central processing unit, CPU). When the communication apparatus is the component that has the function of the first device (or the second device), the transceiver module may be a radio frequency unit, and the processing module may be a processor. When the communication apparatus is the chip system, the communication apparatus may be a field programmable gate array (field programmable gate array, FPGA), an application-specific integrated circuit (application-specific integrated circuit, ASIC), a system-on-a-chip (system-on-a-chip, SoC), a CPU, a network processor (network processor, NP), a digital signal processing circuit (digital signal processor, DSP), a micro controller (micro controller unit, MCU), a programmable controller (programmable logic device, PLD), or another integrated chip. The processing module may be a processor of the chip system. The transceiver module or a communication interface may be an input/output interface or an interface circuit of the chip system. For example, the interface circuit may be a code/data read/write interface circuit. The interface circuit may be configured to receive code instructions (where the code instructions are stored in the memory, and may be directly read from the memory, or may be read from the memory through another device) and transmit the code instructions to the processor. The processor may be configured to run the code instructions to perform the method in the foregoing method embodiment. For another example, the interface circuit may alternatively be a signal transmission interface circuit between a communication processor and the transceiver machine.

When the communication apparatus is a chip-type apparatus or circuit, the apparatus may include a transceiver unit and a processing unit. The transceiver unit may be an input/output circuit and/or a communication interface. The processing unit is an integrated processor, a microprocessor, or an integrated circuit.

An embodiment of this application further provides a communication system. Specifically, the communication system includes at least one first device and at least one second device. For example, the communication system includes the first device and the second device that are configured to implement the related functions in FIG. 6. For details, refer to the related descriptions in the method embodiment. Details are not described herein again.

An embodiment of this application further provides a computer-readable storage medium, including instructions. When the instructions are run on a computer, the computer is enabled to perform the method performed by the first device or the second device in FIG. 6.

An embodiment of this application further provides a computer program product, including instructions. When the instructions are run on a computer, the computer is enabled to perform the method performed by the first device or the second device in FIG. 6.

An embodiment of this application provides a chip system. The chip system includes a processor, and may further include a memory, configured to implement a function of the first device in the foregoing method, or configured to implement a function of the second device in the foregoing method. The chip system may include a chip, or may include a chip and another discrete component.

It should be understood that sequence numbers of the foregoing processes do not mean execution sequences in various embodiments of this application. The execution sequences of the processes should be determined based on functions and internal logic of the processes, and should not constitute any limitation on the implementation processes of embodiments of this application.

A person of ordinary skill in the art may be aware that various illustrative logical blocks (illustrative logic blocks) and steps (steps) that are described with reference to embodiments disclosed in this specification can be implemented by using electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a specific operating process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, that is, may be located in one position, or may be distributed on a plurality of network units. A part or all of the units may be selected based on an actual requirement to achieve the objectives of the solutions of embodiments.

When the functions are implemented in a form of a software functional unit and sold or used as an independent product, the functions may be stored in a computer-readable storage medium. Based on this understanding, a part that essentially contributes to the technical solutions of this application or a part of the technical solutions may be implemented in a form of a software product. The computer software product is stored in a storage medium, and includes several instructions for enabling a computer device (which may be a personal computer, a server, a network device, or the like) to perform all or a part of steps of the method in embodiments of this application. The foregoing storage medium includes any medium, for example, a USB flash drive, a removable hard disk, a read-only memory (read-only memory, ROM), a RAM, a magnetic disk, or an optical disc, that can store program code.

It is clear that a person skilled in the art can make various modifications and variations to this application without departing from the scope of this application. In this way, provided that these modifications and variations of this application fall within the scope of the claims of this application and equivalent technologies thereof, this application is also intended to cover these modifications and variations.

## Claims

1. A communication method, comprising:
determining, by the communication apparatus, a target subcarrier set based on a first subcarrier set and a second subcarrier set, wherein the first subcarrier set and the second subcarrier set have M same subcarriers, a subcarrier in the first subcarrier set is used to carry a reference signal, a subcarrier in the second subcarrier set is used to carry a signal for suppressing a peak-to-average power ratio PAPR of a waveform, the target subcarrier set and the first subcarrier set have Y same subcarriers, and Y is greater than or equal to 0 and less than M; and
performing, by the communication apparatus, data transmission based on the first subcarrier set and the target subcarrier set.

2. The method according to claim 1, wherein the determining, by the communication apparatus, a target subcarrier set based on a first subcarrier set and a second subcarrier set comprises:
determining, by the communication apparatus, the target subcarrier set based on the first subcarrier set, the second subcarrier set, and a mapping relationship, wherein the mapping relationship is correspondences between a plurality of first subcarrier sets, a plurality of second subcarrier sets, and a plurality of target subcarrier sets.

3. The method according to claim 1, wherein the target subcarrier set comprises X subcarriers in the third subcarrier set and a fourth subcarrier set, wherein the fourth subcarrier set is a set comprising a subcarrier in all subcarriers in a bandwidth of the communication apparatus other than a subcarrier comprised in the third subcarrier set and the first subcarrier set, the third subcarrier set is a subcarrier set obtained by excluding X subcarriers from the fifth subcarrier set, the fifth subcarrier set is obtained by performing K cyclic shifts on the second subcarrier set, K is greater than or equal to 1 and is less than or equal to a largest cyclic shift quantity, X is a quantity of subcarriers comprised in an intersection set of the fifth subcarrier set and the first subcarrier set, and X is less than or equal to M.

4. The method according to claim 3, wherein the X subcarriers comprise a first subcarrier, the first subcarrier corresponds to a largest quantity of sequence number differences, the sequence number difference belongs to a first sequence number difference set, and the first sequence number difference set is obtained by excluding a sequence number difference in a third sequence number difference set from a second sequence number difference set, wherein the second sequence number difference set comprises a difference between a sequence number of each subcarrier in the fourth subcarrier set and a sequence number of each subcarrier in the third subcarrier set; and the third sequence number difference set comprises a difference between sequence numbers of subcarriers in the third subcarrier set.

5. The method according to claim 1, wherein the target subcarrier set comprises Z subcarriers in a sixth subcarrier set and a seventh subcarrier set, wherein the sixth subcarrier set is a set comprising a remaining subcarrier obtained by excluding the M subcarriers that overlap the first subcarrier set from the second subcarrier set, the seventh subcarrier set is a set comprising a subcarrier in all subcarriers in a bandwidth of the communication apparatus other than a subcarrier comprised in the sixth subcarrier set and the first subcarrier set, and Z is less than or equal to M.

6. The method according to claim 5, wherein the Z subcarriers comprise a second subcarrier, the second subcarrier corresponds to a largest quantity of sequence number differences, the sequence number difference belongs to a fourth sequence number difference set, and the fourth sequence number difference set is obtained by excluding a sequence number difference in a sixth sequence number difference set from a fifth sequence number difference set, wherein the fifth sequence number difference set comprises a difference between a sequence number of each subcarrier in the seventh subcarrier set and a sequence number of each subcarrier in the sixth subcarrier set; and the sixth sequence number difference set comprises a difference between sequence numbers of subcarriers in the sixth subcarrier set.

7. The method according to claim 4, wherein the first subcarrier belongs to at least two third subcarriers in the fourth subcarrier set, and quantities of sequence number differences corresponding to the at least two third subcarriers are the same, and
a sequence number of the first subcarrier is a smallest sequence number in sequence numbers of the at least two third subcarriers; or
a sequence number of the first subcarrier is a largest sequence number in sequence numbers of the at least two third subcarriers; or
the first subcarrier is a y^{th} subcarrier in the at least two third subcarriers, and sequence numbers of the at least two third subcarriers are sorted in ascending order or descending order.

8. The method according to claim 1, wherein the target subcarrier set is a set comprising a remaining subcarrier obtained by excluding X subcarriers that overlap the first subcarrier set from a fifth subcarrier set, wherein the fifth subcarrier set is a subcarrier set obtained by performing K cyclic shifts on the second subcarrier set, and K is greater than or equal to 1 and is less than or equal to a largest cyclic shift quantity.

9. The method according to any one of claims 1 to 8, wherein the method further comprises:
receiving, by the communication apparatus, information about the first subcarrier set and/or information about the second subcarrier set that are/is sent by a network device.

10. The method according to any one of claims 1 to 8, wherein the method further comprises:
sending, by the communication apparatus, information about the first subcarrier set and/or information about the second subcarrier set to a terminal device.

11. A communication apparatus, comprising a processing module and a transceiver module, wherein
the processing module is configured to determine a target subcarrier set based on a first subcarrier set and a second subcarrier set, wherein the first subcarrier set and the second subcarrier set have M same subcarriers, a subcarrier in the first subcarrier set is used to carry a reference signal, a subcarrier in the second subcarrier set is used to carry a signal for suppressing a peak-to-average power ratio PAPR of a waveform, the target subcarrier set and the first subcarrier set have Y same subcarriers, and Y is greater than or equal to 0 and less than M; and
the transceiver module is configured to perform data transmission based on the first subcarrier set and the target subcarrier set.

12. The apparatus according to claim 11, wherein the processing module is specifically configured to:
determine the target subcarrier set based on the first subcarrier set, the second subcarrier set, and a mapping relationship, wherein the mapping relationship is correspondences between a plurality of first subcarrier sets, a plurality of second subcarrier sets, and a plurality of target subcarrier sets.

13. The apparatus according to claim 11, wherein the target subcarrier set comprises X subcarriers in the third subcarrier set and a fourth subcarrier set, wherein the fourth subcarrier set is a set comprising a subcarrier in all subcarriers in a bandwidth of the communication apparatus other than a subcarrier comprised in the third subcarrier set and the first subcarrier set, the third subcarrier set is a subcarrier set obtained by excluding X subcarriers from the fifth subcarrier set, the fifth subcarrier set is obtained by performing K cyclic shifts on the second subcarrier set, K is greater than or equal to 1 and is less than or equal to a largest cyclic shift quantity, X is a quantity of subcarriers comprised in an intersection set of the fifth subcarrier set and the first subcarrier set, and X is less than or equal to M.

14. The apparatus according to claim 13, wherein the X subcarriers comprise a first subcarrier, the first subcarrier corresponds to a largest quantity of sequence number differences, the sequence number difference belongs to a first sequence number difference set, and the first sequence number difference set is obtained by excluding a sequence number difference in a third sequence number difference set from a second sequence number difference set, wherein the second sequence number difference set comprises a difference between a sequence number of each subcarrier in the fourth subcarrier set and a sequence number of each subcarrier in the third subcarrier set; and the third sequence number difference set comprises a difference between sequence numbers of subcarriers in the third subcarrier set.

15. The apparatus according to claim 11, wherein the target subcarrier set comprises Z subcarriers in a sixth subcarrier set and a seventh subcarrier set, wherein the sixth subcarrier set is a set comprising a remaining subcarrier obtained by excluding the M subcarriers that overlap the first subcarrier set from the second subcarrier set, the seventh subcarrier set is a set comprising a subcarrier in all subcarriers in a bandwidth of the communication apparatus other than a subcarrier comprised in the sixth subcarrier set and the first subcarrier set, and Z is less than or equal to M.

16. The apparatus according to claim 15, wherein the Z subcarriers comprise a second subcarrier, the second subcarrier corresponds to a largest quantity of sequence number differences, the sequence number difference belongs to a fourth sequence number difference set, and the fourth sequence number difference set is obtained by excluding a sequence number difference in a sixth sequence number difference set from a fifth sequence number difference set, wherein the fifth sequence number difference set comprises a difference between a sequence number of each subcarrier in the seventh subcarrier set and a sequence number of each subcarrier in the sixth subcarrier set; and the sixth sequence number difference set comprises a difference between sequence numbers of subcarriers in the sixth subcarrier set.

17. The apparatus according to claim 14, wherein the first subcarrier belongs to at least two third subcarriers in the fourth subcarrier set, and quantities of sequence number differences corresponding to the at least two third subcarriers are the same, and
a sequence number of the first subcarrier is a smallest sequence number in sequence numbers of the at least two third subcarriers; or
a sequence number of the first subcarrier is a largest sequence number in sequence numbers of the at least two third subcarriers; or
the first subcarrier is a y^{th} subcarrier in the at least two third subcarriers, and sequence numbers of the at least two third subcarriers are sorted in ascending order or descending order.

18. The apparatus according to claim 11, wherein the target subcarrier set is a set comprising a remaining subcarrier obtained by excluding X subcarriers that overlap the first subcarrier set from a fifth subcarrier set, wherein the fifth subcarrier set is a subcarrier set obtained by performing K cyclic shifts on the second subcarrier set, K is greater than or equal to 1 and is less than or equal to a largest cyclic shift quantity.

19. The apparatus according to any one of claims 11 to 18, wherein the transceiver module is further configured to:
receive information about the first subcarrier set and/or information about the second subcarrier set that are/is sent by a network device.

20. The apparatus according to any one of claims 11 to 18, wherein the transceiver module is further configured to:
send information about the first subcarrier set and/or information about the second subcarrier set to a terminal device.

21. A communication apparatus, wherein the communication apparatus comprises a processor and a memory, the memory is configured to store a computer program, and the processor is configured to execute the computer program stored in the memory, to enable the communication apparatus to perform the method according to any one of claims 1 to 10.

22. A computer-readable storage medium, wherein the computer-readable storage medium stores a computer program, and when the computer program is executed by a computer, the computer is enabled to perform the method according to any one of claims 1 to 10.

23. A computer program product, wherein the computer program product stores a computer program, and when the computer program is executed by a computer, the computer is enabled to perform the method according to any one of claims 1 to 10.

24. A communication system, wherein the communication system comprises a terminal device and a network device, wherein the terminal device is configured to perform the method according to any one of claims 1 to 9, and the network device is configured to perform the method according to any one of claims 1 to 8 and 10.
